(19) Europäisches Patentamt

European Patent Office

Office européen des brevets

(11) **EP 1 037 413 B1**

(12) **EUROPEAN PATENT SPECIFICATION**

(45) Date of publication and mention
of the grant of the patent:
**19.02.2003 Bulletin 2003/08**

(51) Int Cl.[7]: **H04B 10/142**, G02B 6/28

(21) Application number: **00200774.8**

(22) Date of filing: **06.03.2000**

(54) **Optical apparatus for selecting a predetermined item of information from a coherent optical signal**

Optische Vorrichtung zum Auswählen eines vorbestimmten Informationssatzes aus einem kohärenten optischen Signal

Dispositif optique pour sélectionner un item d'informations prédeterminé d'un signal cohérent optique

(84) Designated Contracting States:
**AT BE CH CY DE DK ES FI FR GB GR IE IT LI LU MC NL PT SE**

(30) Priority: **15.03.1999 EP 99830136**

(43) Date of publication of application:
**20.09.2000 Bulletin 2000/38**

(73) Proprietor: **Corning O.T.I., Inc.
Corning, NY 14831 (US)**

(72) Inventors:
• **Boffi, Pierpaolo**
  **27058 Voghera (PV) (IT)**
• **Maier, Guido Alberto**
  **20090 Segrate (MI) (IT)**
• **Marazzi Lucia**
  **27100 Pavia (IT)**
• **Martinelli, Mario**
  **20097 S. Donato Milanese (MI) (IT)**
• **Parolari, Paola**
  **20121 Milano (MI) (IT)**
• **Piccinin, Davide**
  **20132 Milano (IT)**
• **Sguazzotti, Alessandro**
  **20159 Milano (IT)**

(74) Representative: **Poole, Michael John et al
Corning Limited
Patents & Licensing Department
Quantum House
Maylands Avenue
Hemel Hempstead, Herts. HP2 7DE (GB)**

(56) References cited:
**EP-A- 0 869 589**

• **COPPINGER F ET AL: "ALL-OPTICAL RF FILTER USING AMPLITUDE INVERSION IN A SEMICONDUCTOR OPTICAL AMPLIFIER" IEEE TRANSACTIONS ON MICROWAVE THEORY AND TECHNIQUES, vol. 45, no. 8, PART 02, 1 August 1997 (1997-08-01), pages 1473-1477, XP000696780 ISSN: 0018-9480**

## Description

The present invention relates to an optical apparatus for selecting a predetermined item of information from a coherent optical signal. More particularly, the present invention relates to an optical apparatus for selecting a predetermined item of information from a coherent optical signal which carries a set of digital data, the apparatus comprising an input, an optical-optical device which transfers the said set of digital data to a highly incoherent light beam, an optical beam splitter, at least two optical delay lines, and a coupler.

It also relates to an optical transmission system comprising this optical apparatus and a method for carrying out this selection of a predetermined item of information from an optical signal.

At the present time, optical technology is predominantly used in telecommunications networks for transmitting optical signals, in which use is made of the known wideband properties offered by optical fibres, while the operations of processing optical signals, for example multiplexing and switching, are carried out by means of opto-electronic devices.

However, opto-electronic devices have the known disadvantages of electronic systems which are now becoming bottlenecks in optical communication systems and in optical networks. This is because an electronic apparatus has a narrow bandwidth with respect to the optical band available in optical communication systems, and is generally based on serial processing of signals.

Research is therefore being increasingly directed towards all-optical solutions not only for transmitting signals but also for processing them.

In optical transmission lines and in switching nodes of an optical network, where a multiplicity of communication channels converges and originates, there is a widely felt need for devices capable of carrying out all-optical operations on sequences of bits (cells).

For example, optical filters of the optical delay line type have been proposed for the optical processing of optical signals.

The basic structure of these filters typically consists of a 1xN optical beam splitter at the input, a set of N optical fibre delay lines whose lengths differ from each other, and an Nx1 coupler at the output. More particularly, the lengths of the N delay lines differ from each other by a multiple of a predetermined length $\Delta L$. An optical signal at the input of the filter is divided into N optical signals which are then sent along the N delay lines where they are thus delayed with respect to each other by a multiple of a predetermined time. At the output of the said N delay lines, the N delayed signals are subsequently recombined by the 1xN coupler.

These filters can operate in both coherent and incoherent conditions.

In coherent conditions, the difference in length $\Delta L_{max}$ between the longest line and the shortest line is much smaller than the coherence length of the optical signal. On the other hand, in incoherent conditions the difference in length $\Delta L_{max}$ between the two shortest lines is much greater than the said coherence length.

More particularly, in coherent conditions the optical signals at the output of the delay lines are added, in the Nx1 coupler, in a coherent way, thus producing an interference which is constructive or destructive according to their relative phase delays (in other words according to the differences in the optical paths along which the various signals have passed), while in incoherent conditions the optical signals are added on the basis of their intensity.

A filter operating in coherent conditions therefore operates correctly only if, once the length of its delay lines has been chosen, it is produced with an accuracy of the order of the wavelength of the optical signal (generally several nm). However, this filter is difficult to produce, and one which operates in incoherent conditions is generally preferred to it, since it does not give rise to this problem of construction.

Optical filters of the optical delay line type which operate in incoherent conditions have already been proposed in numerous papers [W.C. Kwong and P.R. Prucnal ("Synchronous CDMA demonstration for fibre optic networks with optical processing", Electronics Letters, vol. 26, no. 24, pp. 1990-1992, November 1990); P.R. Prucnal et al. ("Spread spectrum fiber-optic local area network using optical processing", Journal of Lightwave Technology, vol. LT-4, No. 5, pp. 547-554, May 1986); patent application EP 0 200 836; K.P. Jackson et al. ("Optical fiber delay-line signal processing", IEEE Transactions on Microwave Theory and Techniques, vol. MTT-33, No. 3, pp. 193-208, March 1985); B. Moslehi et al. ("Novel amplified fiber optic recirculating delay line processor", Journal of Light-wave Technology, vol. 10, No. 8, pp. 1142-1147, August 1992); B. Moslehi et al. ("Fiber optic lattice signal processing", Proceedings of the IEEE, vol. 72, No. 7, pp. 909-930, July 1984); J. Capmany et al. ("Synthesis of fiber-optic delay line filters", Journal of Lightwave technology, vol. 13, No. 10, pp. 2003-2012, October 1995); S. Sales et al. ("Experimental demonstration of fibre-optic delay line filters with negative coefficients", Electronics Letters, vol. 31, No. 13, pp. 1095-1097, 1995); F. Coppinger et al. ("Nonrecursive tunable photonic filter using wavelength-selective true time delay", IEEE Photonics Technology Letters, vol. 8, No. 9, pp. 1214-1216, September 1996) and F. Coppinger et al. ("Continuously tunable radio-frequency notch filter", IEEE Photonics Technology Letters, vol. 9, No. 3, pp. 339-341, March 1997)].

However, when these filters operating in incoherent conditions are used in the present optical communication systems for processing a digital coherent optical signal at 2.5 Gbit/s from a conventional laser source used for optical communications, the signal at the output from the filters is unstable in time and has high-intensity noise components within the band (6 GHz) of the photodetector. Although the cause of these phenomena has not yet been fully explained, the inventors of the present invention consider that they are due to the typical phase noise of the laser sources [(B. Moslehi, "Analysis of optical phase noise in fiber-optic systems employing a laser source with arbitrary coherence time", Journal of Lightwave Technology, vol. LT-4, No. 9, pp. 1334-1351, September 1986); (B. Moslehi, "Noise power spectra of optical two-beam interferometers induced by the laser phase noise", Journal of Lightwave Technology, vol. LT-4, No. 11, pp. 1704-1710, November 1986); J.A. Armstrong, "Theory of interferometric analysis of laser phase noise", Journal of the Optical society of America, vol. 56, No. 8, August 1966)].

Coppinger et al. ("All-Optical RF filter using amplitude inversion in a semiconductor optical amplifier", IEEE Transactions on Microwave Theory and Techniques, vol. 45, No. 8, pp. 1473-1477, August 1997) propose overcoming this problem by means of a device comprising a first laser source which emits an optical signal at a wavelength $\lambda_1$ and is intensity modulated at radio frequency. This coherent signal $\lambda_1$ is divided into two parts, of which one part is sent to an optical delay line and the other is combined with a second continuous optical signal supplied by a second laser source and having a wavelength $\lambda_2$ different from $\lambda_1$. These last two signals are amplified by an erbium-doped optical amplifier (EDFA) and are then sent to a semiconductor amplifier (SOA). Owing to the known phenomenon of "cross-grain modulation", the optical signal $\lambda_2$ leaving the SOA is also intensity modulated but with a logic which is the inverse of that of the optical signal $\lambda_1$. At the output of the SOA, the coherent optical signal $\lambda_1$ is filtered and the coherent optical signal $\lambda_2$, with inverted logic with respect to the coherent optical signal $\lambda_1$, is recombined with the part of the coherent optical signal $\lambda_1$ which is propagated in the optical delay line. The two coherent optical signals $\lambda_1$ and $\lambda_2$ recombined in this way are then sent to a photodetector.

Since the two signals have two different wavelengths $\lambda_1$ and $\lambda_2$, the phase noise of the laser sources at the output of this photodetector is at the beat frequency ($\lambda_2 - \lambda_1$) of the two signals, instead of being in the base band as it is when signals having the same wavelength are used. In the experiments carried out by the authors, the phase noise at the beat frequency is thus filtered by means of a photodetector having a band which does not detect this beat frequency (p. 1475, right-hand column, lines 11-21).

The applicant has observed that this device was designed to carry out the operation of subtracting optical signals on the basis of their intensity, which cannot be executed in conventional optical delay line filters operating in incoherent conditions, since these conventional filters are only capable of adding the signals on the basis of their intensity. This device cannot, therefore, be used in any applications which require addition of the signals.

Additionally, this device has the considerable disadvantage that, in the applications in which more than one delay line has to be used, it requires as many laser sources at wavelengths different from each other as there are additional delay lines. This solution is very complicated, of low reliability, and very expensive.

The inventors of the present invention have found that the aforesaid disadvantages are overcome by using a coherent laser light beam carrying a certain item of digital information, transferring this information to a highly incoherent light beam and then sending this highly incoherent light to an optical delay line filter which operates in incoherent conditions.

In a first aspect, the present invention therefore relates to an optical apparatus for selecting a predetermined item of information from a coherent optical signal carrying a set of digital data, the said optical apparatus comprising

- an input for the said coherent optical signal;
- an optical-optical device connected to the said input for propagating the said coherent optical signal, the said device being capable of generating a highly incoherent light having a predetermined coherence time and of transferring the said set of digital data carried by the said coherent optical signal to the said highly incoherent light in such a way as to provide at its output a highly incoherent optical signal carrying the said set of digital data,
- an optical beam splitter for cloning the said highly incoherent optical signal into at least two highly incoherent optical signals, the said optical beam splitter having an input connected to the said device and at least two outputs for the said at least two highly incoherent optical signals;
- at least two optical delay lines connected to the said at least two outputs of the said optical beam splitter, the said at least two optical delay lines having different wavelengths from each other, the difference in length between the said at least two optical delay lines being such that the said at least two highly incoherent optical signals are delayed with respect to each other by a predetermined time, the said predetermined time being greater than the said predetermined coherence time of the said highly incoherent optical signal and being chosen in accordance with the said predetermined item of information which is to be selected;
- a coupler with at least two inputs connected to the said at least two optical delay lines, and one output, the said coupler being capable of recombining the said at least two highly incoherent optical signals into a single highly incoherent optical output signal having an intensity which is at a maximum in the presence of the said predetermined item of information which is to be selected.

In the present description and in the attached claims, the expression

⇒ "highly incoherent optical signal" is used to denote an optical signal having a coherence time $\tau_c$ of less than approximately 20 ps and, therefore, a coherence length $L_c$ of less than approximately 4 mm, in which

-   $\tau_c$ is assumed to be equal to $1/\Delta\nu$, where $\Delta\nu$ is assumed to be equal to the ratio $[(\Delta\lambda * c)/\lambda^2]$ and "c" is the velocity of light in a vacuum, $\Delta\lambda$ is what is conventionally known as the "full width at half maximum", in other words the difference between the two extreme wavelength values at which the optical spectrum of the optical signal is equal to half of its maximum value and $\lambda$ is assumed to be equal to the central wavelength of $\Delta\lambda$; and
-   $L_c$ is assumed to be equal to the product $\tau_c * v$, where "v" is the velocity of light in the means of propagation in question (for example, in an optical fibre v is approximately equal to $2 \times 10^8$ m/s).

Preferably, the said expression "highly incoherent optical signal" is used to denote an optical signal having a coherence time $\tau_c$ of less than approximately 10 ps and, therefore, a coherence length $L_c$ of less than approximately 2 mm; more preferably, it is used to denote an optical signal having a coherence time $\tau_c$ of less than approximately 5 ps and, therefore, a coherence length $L_c$ of less than approximately 1 mm; even more preferably, it is used to denote an optical signal having a coherence time $\tau_c$ of less than approximately 1 ps and, therefore, a coherence length $L_c$ of less than approximately 0.2 mm.

⇒ "highly incoherent optical source" is used to denote a source which supplies a highly incoherent optical signal as defined above;

⇒ "coherent optical signal" is used to denote an optical signal having a coherence time $\tau_c$ of more than approximately 50 ps (in other words, a coherence length of more than approximately 10 mm); preferably, it is used to denote an optical signal having a coherence time $\tau_c$ of more than approximately 90 ps (in other words, a coherence length of more than approximately 18 mm); preferably, it is used to denote an optical signal having a coherence time $\tau_c$ of more than approximately 900 ps (in other words, a coherence length of more than approximately 180 mm);

⇒ "coherent optical source" is used to denote a source which supplies a coherent optical signal as defined above.

Typically, the said predetermined time, chosen in accordance with the said predetermined item of information which is to be selected, is equal to a fundamental time $\Delta T$ or to a whole-number multiple of this.

Advantageously, in an application of the optical apparatus according to the invention in a CDMA system, the said fundamental time $\Delta T$ is equal to the chip time $T_c$, the number of the said optical delay lines is equal to the number of chips corresponding to the logical 1 present in the chip sequence which is to be selected, and the difference in length between the said optical delay lines is selected in such a way that the said chips corresponding to the logical 1 appear superimposed on one another at the output of the said optical delay lines.

In turn, in an application of the optical apparatus according to the invention capable of selecting all the peaks which appear at the input delayed by a frame time $T_t$, the said fundamental time $\Delta T$ is equal to the said frame time $T_t$.

Preferably, in this case, the length of the i-th optical delay line is selected in such a way as to delay the i-th highly incoherent optical signal which is propagated in it by a time $\tau_i = (i-1)*T_t + T_1$, where $1 \le i \le N$, N is the number of the optical delay lines, and $T_1$ is the delay introduced by the first optical delay line.

Typically, the said coherent optical signal is supplied by a conventional laser source for optical telecommunications. Preferably, the said coherent optical signal is intensity modulated in accordance with the said set of digital data at a predetermined bit rate. More preferably, the said intensity modulation is of the on/off type.

Typically, the said predetermined bit rate is at least 622 Mbit/s. More typically, it is at least 2.5 Gbit/s. Even more typically, it is at least 10 Gbit/s.

Typically, the said optical apparatus according to the invention also comprises a comparator element for determining whether the said intensity of the said highly incoherent optical output signal is greater or less than a predetermined intensity threshold.

In one embodiment, the said comparator element comprises

-   a photodetector for converting the said highly incoherent optical output signal into an electrical signal having a voltage whose value depends on the said intensity of the said highly incoherent optical output signal; and
-   an electrical circuit for determining whether the said voltage is greater or less than a predetermined voltage threshold.

Advantageously, the said optical-optical device comprises

-   an input for the said coherent optical signal;
-   an active waveguide optically connected to the said input for the propagation of the said coherent optical signal, the said active waveguide having a first and a second end and being capable of generating highly incoherent light;

- a pump source for pumping the said active waveguide and obtaining a predetermined gain; and
- an output optically connected to the said second end of the said active waveguide for the output of at least part of the said highly incoherent light;

the said coherent optical signal having a power and a wavelength selected in such a way that the said set of digital data which it carries is transferred to the said highly incoherent light during its propagation in the said active waveguide.

Advantageously, the said power and the said wavelength of the said coherent optical signal are selected in such a way as to saturate the said predetermined gain of the said active waveguide.

Preferably, the said active waveguide is of the optical fibre type, doped with at least one rare earth. Typically, the said at least one rare earth is erbium. When fast processing times are required, the said active waveguide is preferably of the semiconductor type.

In the case of an active waveguide of the semiconductor type, the said pump source supplies a pumping current having a suitable intensity. On the other hand, in the case of an active waveguide of the optical fibre type doped with at least one rare earth, the said pump source supplies an optical pumping radiation having, preferably, a wavelength of approximately 980 nm or 1480 nm.

Advantageously, the quantity of highly incoherent light may be increased by connecting another highly incoherent light source to the said first end of the said active waveguide.

In a first embodiment,

- the said input is optically connected to the said first end of the said waveguide;
- the said coherent optical signal and at least part of the said highly incoherent light are propagated in the said active waveguide from the said first end towards the said second end; and
- the said optical-optical device additionally comprises a suitable optical filter associated with the said output and capable of eliminating the said coherent optical signal after it has been propagated along the said active waveguide.

Typically, the said optical filter is capable of blocking the propagation of the said coherent optical signal while simultaneously allowing most of the said ASE to pass. For example, the said filter is selected from the group of conventional devices comprising a high-pass filter, a low-pass filter, a "notch" filter and a filter having a substantially bell-shaped transfer function.

In a preferred embodiment,

- the said second end of the said waveguide is also optically connected to the said input;

- the said coherent optical signal is propagated in the said first waveguide from the said second end towards the said first end; and
- the said highly incoherent light is propagated at least partially in the said waveguide from the said first end towards the said second end.

Typically, this preferred embodiment of the said optical-optical device also comprises an optical beam splitter having a first, a second and a third port of which the first forms the said input of the said optical-optical device, the second is connected to the said second end of the said active waveguide and the third forms the said output of the said optical-optical device.

Preferably, the said optical beam splitter is an optical circulator. Alternatively, it may be a conventional 1x2 waveguide or fused fibre splitter.

In a second aspect, the present invention relates to an optical transmission system comprising

a) a transmitting apparatus for transmitting a coherent optical signal carrying a set of digital data;
b) an optical transmission line connected to the said transmitting apparatus for propagating the said coherent optical signal;
c) a receiving apparatus connected to the said optical transmission line;
d) an optical apparatus associated with the said optical transmission line for selecting a predetermined item of information from the said coherent optical signal, the said optical apparatus comprising

- an input for at least part of the said coherent optical signal;
- an optical-optical device connected to the said input for propagating the said at least part of the said coherent optical signal, the said optical-optical device being capable of generating a highly incoherent light and of transferring the said set of digital data carried by the said coherent optical signal to the said highly incoherent light in such a way as to produce at its output a highly incoherent optical signal carrying the said set of digital data;
- an optical beam splitter for cloning the said highly incoherent optical signal into at least two highly incoherent optical signals, the said optical beam splitter having an input connected to the said device and at least two outputs for the said at least two highly incoherent optical signals;
- at least two optical delay lines connected to the said at least two outputs of the said optical beam splitter, the said at least two optical delay lines having different lengths from each other, the difference in length between the said at least two optical delay lines being such as to delay one of the said at least two highly incoherent optical signals by a predetermined time with respect to the other, the said predetermined time being longer than the said predetermined coherence time of the said highly incoherent light and being chosen in accordance with the said predetermined item of information which is to be selected;

- a coupler with at least two inputs connected to the said at least two optical delay lines and one output, the said coupler being capable of recombining the said at least two highly incoherent optical signals into a single highly incoherent optical output signal having an intensity which is maximum in the presence of the said predetermined item of information which is to be selected.

Typically, the said transmitting apparatus is a conventional apparatus capable of supplying the said coherent optical signal modulated at a predetermined transmission bit rate. For example, it comprises a conventional laser source capable of supplying a continuous coherent optical signal and a modulator for modulating the said continuous optical signal under the control of an electrical signal which carries a set of digital data to be transmitted along the optical transmission line.

Preferably, the said optical signal is intensity modulated by a conventional on/off modulation.

Typically, the said modulator is a conventional electro-optical modulator of the Mach-Zehnder type. For example, it consists of a waveguide on a substrate of $LiNbO_3$ associated with two electrodes for the application of the said electrical signal.

Typically, the said optical transmission line comprises at least one optical fibre. The said optical fibre is preferably inserted in an optical cable.

When the path followed by the said optical transmission line requires it, the said optical transmission line comprises at least one optical amplifier. Typically, the said at least one optical amplifier is a device of the conventional type such as an active fibre amplifier doped with at least one rare earth (for example erbium), or a semiconductor amplifier.

For the structural and functional characteristics of the aforesaid optical apparatus of the optical transmission system according to the present invention, reference should be made to the above description of the optical apparatus according to the present invention.

In a third aspect, the present invention relates to a method for selecting a predetermined item of information from a coherent optical signal carrying a set of digital data, the said method comprising the phases of

a) generating a highly incoherent light having a predetermined coherence time;
b) transferring the said set of digital data from the said coherent optical signal to the said highly incoherent light in such a way as to obtain a highly incoherent optical signal carrying the said set of digital data;
c) cloning the said highly incoherent optical signal into at least two highly incoherent optical signals;
d) delaying one of the said at least two highly incoherent optical signals by a predetermined time with respect to the other, the said predetermined time being longer than the said predetermined coherence time of the said highly incoherent light and being chosen in accordance with the said predetermined item of digital information which is to be selected;
e) recombining the said two highly incoherent optical signals into a single highly incoherent optical output signal having an intensity which is maximum in the presence of the said predetermined item of information which is to be selected.

Typically, the said highly incoherent light of the aforesaid phase a) is generated by pumping an active waveguide with a suitable pump source so that it has a predetermined gain.

Advantageously, the said coherent optical signal has a power and a wavelength selected in such a way as to saturate the said predetermined gain of the said active waveguide. Additionally, it is typically intensity modulated in accordance with the said set of digital data.

Advantageously, phase b) consists in the intensity modulation of the said highly incoherent light in accordance with the said set of digital data.

More advantageously, the said phase b) consists in the propagation of the said coherent optical signal through the said active waveguide.

Preferably, in phase b) the quantity of highly incoherent light to which the said set of digital data is to be transferred may be increased by propagating a second highly incoherent light in the said active waveguide.

Typically, the said method additionally comprises the phase f) of determining whether the said intensity of the said highly incoherent optical output signal is greater or smaller than a predetermined intensity threshold.

In one embodiment, the said phase f) comprises the phases of

f1) converting the said highly incoherent optical output signal into an electrical signal having a voltage whose value depends on the said intensity of the said optical signal; and
f2) determining whether the said voltage is greater or smaller than a predetermined voltage threshold.

Characteristics and advantages of the invention will now be illustrated with reference to embodiments represented by way of example and without restriction in the attached drawings, in which:

- Fig. 1 is a schematic representation of an optical apparatus according to the invention;
- Fig. 2 is a schematic representation of a first embodiment of an optical-optical device of the optical apparatus in Fig. 1;
- Fig. 3 is a schematic representation of a second embodiment of an optical-optical device of the optical apparatus in Fig. 1;
- Fig. 4 is a schematic representation of a third embodiment of an optical-optical device of the optical apparatus in Fig. 1;
- Fig. 5 is a schematic representation of a fourth embodiment of an optical-optical device of the optical apparatus in Fig. 1;
- Fig. 6 shows schematically an encoding process in a CDMA system;
- Fig. 7 is a schematic representation of an optical communication system according to another aspect of the present invention;
- Fig. 8 shows schematically the experimental set-up used in a first series of measurements made to verify the behaviour of the apparatus according to the invention (in which the optical-optical device had the configuration shown in Fig. 4) as an optical correlator of sequences of bits;
- Fig. 9 shows the results of an operation of autocorrelation (Fig. 9a) and cross-correlation (Fig. 9b) obtained with the experimental set-up shown in Fig. 8;
- Fig. 10 shows schematically the experimental set-up used in a second series of measurements made to verify the behaviour of the apparatus according to the invention (in which the optical-optical device had the configuration shown in Fig. 2) as an optical correlator of sequences of bits;
- Fig. 11 shows the results of an operation of auto-correlation (Fig. 11a) and cross-correlation (Fig. 11b) obtained with the experimental set-up shown in Fig. 10; and
- Fig. 12 shows schematically the experimental set-up used in a third series of measurements made in order to compare the behaviour of an optical apparatus according to the invention with a device of the conventional type.

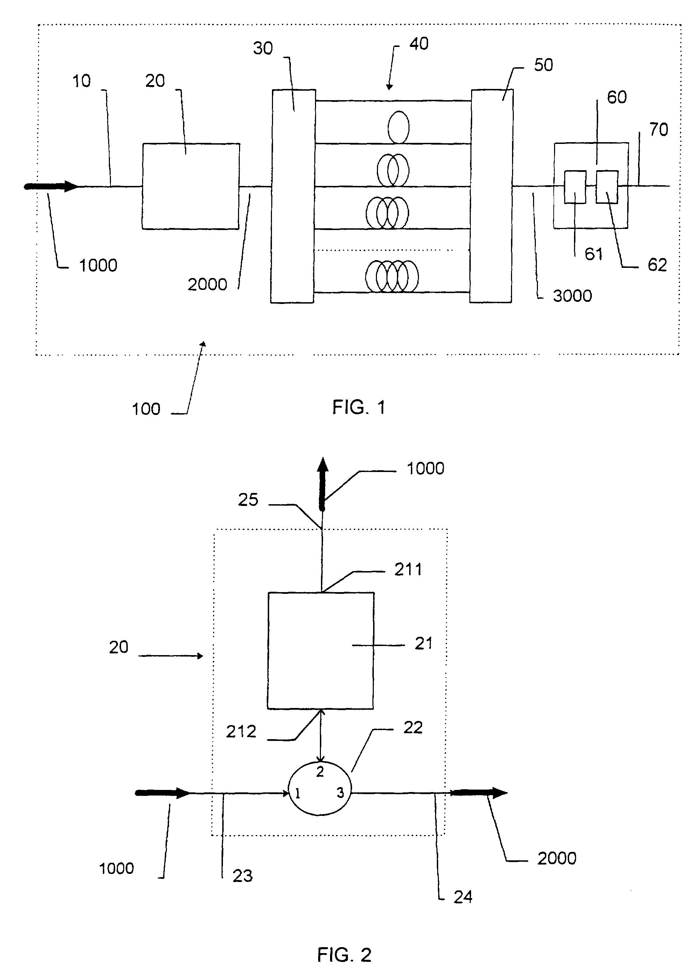

Fig. 1 shows an embodiment of an optical apparatus 100 according to the invention, comprising an input 10 for a coherent optical signal 1000 which is amplitude modulated at a predetermined bit rate according to a set of digital data, an optical-optical device 20 capable of supplying a highly incoherent optical signal 2000 carrying the said set of digital data, an optical beam splitter 30, a plurality 40 of optical delay lines, a coupler 50, a comparator device 60 and an output 70.

The input 10 typically consists of an optical fibre. Preferably, the optical fibre is single-mode at the wavelength of the coherent optical signal 1000.

In an embodiment shown in Fig. 2, the optical-optical device 20 according to the invention comprises an input 23, an active waveguide 21, an optical beam splitter 22, a first output 24 and a second output 25.

The input 23 is optically connected to the input 10 of the apparatus 100, while the first output 24 is connected to the input of the optical beam splitter 30.

The optical beam splitter 22 has three ports 1, 2, 3, of which the first port 1 forms the input 23 of the optical-optical device 20, the second port 2 is connected to the active waveguide 21, and the third 3 forms the first output 24 of the optical-optical device 20.

Preferably, the optical beam splitter 22 consists of a conventional optical circulator.

Alternatively, it may consist of a conventional "beam splitter" of the fused fibre type or one made by other technologies such as that of integrated optics.

The active waveguide 21 has a first and a second end 211 and 212. The first end 211 forms the second output 25 of the optical-optical device 20, while the second end 212 is connected to the port 2 of the optical beam splitter 22.

This active waveguide 21 is preferably of the semiconductor or optical fibre type. Typical examples of these devices are, respectively, an active waveguide formed with compounds of InP/InGaAsP and an active fibre doped with rare earths such as erbium.

This active waveguide 21 is conventionally pumped by a pump source (not shown). For example, in the case of an active semiconductor waveguide it is pumped by a pumping current having a suitable intensity, and in the case of an active erbium-doped optical fibre waveguide it is pumped by a pump laser, typically emitting at 980 nm or 1480 nm.

Typically, the coherent optical signal 1000 is supplied by a conventional coherent laser source, is obtained from a conventional optical telecommunication line and has a wavelength selected from those typically used in optical transmission (1300-1600 nm).

For example, it has a wavelength of approximately 1555 nm and has a coherence time and length of 100 ps and 2 cm respectively.

It is also intensity modulated, typically by a binary modulation of the on/off type, so that the bit 1 corresponds to the presence of an optical signal having a predetermined intensity and the bit 0 corresponds to the substantial absence of an optical signal.

Additionally, the power and wavelength of this coherent optical signal 1000 are selected in such a way as to saturate the gain of the active wavelength 21 and also to cause the spontaneous emission (Amplified Spontaneous Emission, ASE) at the output of the active waveguide 21 to be intensity modulated as a result of the known phenomenon of "cross-gain modulation" (K. Obermann et al., "Performance analysis of wavelength converters based on cross-gain modulation in semiconductor-optical amplifiers", Journal of Lightwave Technology, vol. 16, No. 1, pp. 78-85, 1998). More particularly, the spontaneous emission at the output of the active waveguide 21 will have an intensity modulated by a logic of opposite sign to the coherent optical signal 1000. In other words, a bit equal to 1 of the coherent optical signal 1000 will correspond to a bit equal to 0 of the spontaneous emission, and vice versa.

If the power of the coherent optical signal 1000 at the input of the optical apparatus 100 is insufficient to saturate the gain of the active waveguide 21, it can be suitably amplified by a conventional optical amplifier.

For the purposes of the present invention, the gain of the active waveguide 21 is considered to be saturated when the power of the coherent optical signal 1000 is greater than the saturation power of the said active waveguide 21 at the wavelength of the said coherent optical signal 1000. In turn, the saturation power is the power at which the gain (expressed in dB) of the active waveguide 21 decreases by 3 dB with respect to the gain which the said active waveguide 21 has when it operates in linear conditions.

In this connection, it is worth noting that the saturation velocity of the gain of an active waveguide depends on the pump power $P_p$ of the active waveguide, the power $P_s$ of the saturating coherent optical signal 1000, and the typical decay time $\tau$ of the laser level excited by the active waveguide. The saturation takes place more rapidly as $P_p$ and $P_s$ increase and as $\tau$ decreases.

For example, in the case of a square-wave modulated saturating optical signal, the time constant $t_{sat}$ of the saturation phenomenon is given by:

$$t_{sat} = \frac{\tau}{1 + \dfrac{P_p}{P_{sat}(\lambda_p)} + \dfrac{P_s}{P_{sat}(\lambda_s)}} \qquad (1)$$

where $P_{sat}(\lambda_p)$ is the saturation power of the active waveguide at the pumping wavelength $\lambda_p$, $P_{sat}(\lambda_s)$ is the saturation power of the active waveguide at the wavelength of the saturating optical signal $\lambda_s$, and the saturation power $P_{sat}$ of an active waveguide at a wavelength $\lambda$ is defined as

$$P_{sat}(\lambda) = \frac{h\lambda A}{\left[\sigma_a(\lambda) + \sigma_e(\lambda)\right] * \tau} \qquad (2)$$

where h is Planck's constant, A is the effective optical beam area, $\sigma_a(\lambda)$ is the absorption cross-section and $\sigma_e(\lambda)$ is the emission cross-section. In the case of an active waveguide of the optical fibre type, the effective optical beam area is given by $\pi\omega^2$, where $\omega$ is the mode radius (E. Desurvire, "Erbium-doped fiber amplifiers. Principle and Applications", John Wiley & Sons, 1994, p. 19).

Additionally, the recovery time $t_{rec}$ of the active waveguide, in other words the time required for the active waveguide to return to the initial condition after the cessation of the saturating optical signal, becomes shorter as $P_p$ increases and as $\tau$ decreases.

For example, in the case of a square-wave modulated saturating optical signal, the recovery time $t_{rec}$ of the saturation phenomenon is given by:

$$t_{rec} = \frac{\tau}{\left[1 + \dfrac{P_p}{P_{sat}(\lambda_p)}\right]}$$

Since $\tau$ is much smaller in an active waveguide of the semiconductor type than in one of the optical fibre type, the semiconductor type has much faster response times and is more suitable for use when the coherent optical signal 1000 is modulated at high bit rates and consequently fast processing times are required. For example, for typical active waveguides of the semiconductor type the decay time $\tau$ is of the order of a few hundred picoseconds or 1 ns, while for typical active waveguides of the erbium-doped optical fibre type it is of the order of 10 ms.

The coherent optical signal 1000 thus enters the optical-optical device 20, passes through the ports 1 and 2 of the optical circulator 22, is propagated along the active waveguide 21 from the end 212 to the end 211 and then leaves the optical-optical device 20 through the said second output 25.

In turn, part of the ASE generated in the active waveguide 21 is propagated towards the first end 211 and then leaves the optical-optical device 20 through the second output 25, and part is propagated towards the second end 212 and then leaves the optical-optical device 20 through the first output 24 and thus enters the optical beam splitter 30.

The coherent optical signal 1000 is then counter-propagated with respect to the part of the ASE which is propagated towards the first output 24 of the optical-optical device 20.

Passing through the active waveguide 21, the coherent optical signal 1000 intensity modulates the gain of the said active waveguide 21 and thus transfers the digital information carried by it to the ASE.

The said ASE is a highly incoherent light beam. It typically has a full width at half maximum, $\Delta\lambda$, of the order of tens of nm, a coherence time of the order of a picosecond and a coherence time of the order of a few $\mu m$. For example, in the case of an active waveguide consisting of erbium-doped optical fibre, the ASE has a full width at half maximum of approximately 30 nm, a coherence time of approximately 0.25 ps and a coherence length of approximately 51 $\mu m$. On the other hand, in the case of an active waveguide of the semiconductor type, the ASE typically has a full width at half maximum of approximately 100 nm, a coherence time of approximately 0.075 ps and a coherence length of approximately 15 μm.

The part of the modulated ASE entering the optical beam splitter 30 forms a highly incoherent optical signal 2000 carrying the same digital information (with inverted logic) as the coherent optical signal 1000.

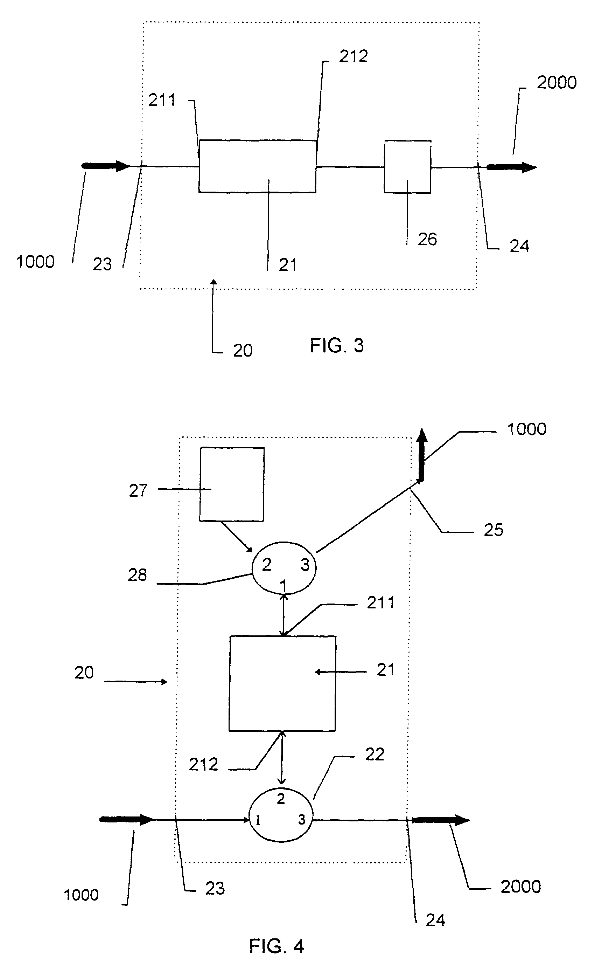

In a second embodiment (Fig. 3), the optical-optical device 20 according to the invention has the same structural and functional characteristics (for which reference should be made to the description above) as the first embodiment in Fig. 2, except for the fact that

- it does not have the optical beam splitter 22;
- it does not have the second output 25;
- it has an optical filter 26 between the second end 212 of the active waveguide 21 and the output 24;
- the first end 211 of the active waveguide 21 forms the input 23 of the optical-optical device 20;
- the second end 212 of the active waveguide 21 forms the output 24 of the optical-optical device 20.

Since in this embodiment the coherent optical signal 1000 is propagated in the active waveguide 21 from the end 211 towards the end 212 - in other words, in the direction of co-propagation with respect to the part of the modulated ASE leaving the optical-optical device 20 from the output 24 - it is filtered at the output from the optical-optical device 20 by the optical filter 26. In this way, only the modulated ASE which forms the highly incoherent optical signal 2000 is sent to the input of the optical beam splitter 30.

The optical filter 26 is an optical filter capable of blocking the propagation of the coherent optical signal 1000 while simultaneously allowing most of the said ASE to pass. Advantageously, it consists of a conventional "notch" filter. Alternatively, it may also consist of a conventional high-pass or low-pass filter, or of a conventional filter having a substantially bell-shaped transfer function.

In a third embodiment (Fig. 4), the optical-optical device 20 according to the invention has the same structural and functional characteristics (for which reference should therefore be made to the description above) as the first embodiment in Fig. 2, except for the fact that it also comprises a second active waveguide 27 and a second optical beam splitter 28.

The said second active waveguide 27 is optically connected to the first end 211 of the first active waveguide 21.

Like the first waveguide 21, the second waveguide 27 is preferably of the semiconductor or optical fibre type, and is conveniently pumped by a pumping source (not shown). For example, in the case of an active waveguide of the semiconductor type it is pumped by a pumping current having a suitable intensity, and in the case of an active waveguide of the erbium-doped optical fibre type it is pumped by a pump laser, typically emitting at 980 nm or 1480 nm.

The optical beam splitter 28 has three ports 1, 2, 3 of which the first 1 is connected to the first end 211 of the first active waveguide 21, the second 2 is connected to the output of the second active waveguide 27 and the third 3 forms the second output 25 of the optical-optical device 20.

Preferably, the optical beam splitter 28 consists of a conventional optical circulator.

Alternatively, it may consist of a conventional "beam splitter" of the fused fibre type. In this case, an optical isolator (not shown) is preferably located between the port 2 of the optical beam splitter and the output of the second active waveguide 27, to prevent the coherent optical signal 1000 from entering the said second active waveguide 27 and, simultaneously, to allow the ASE generated by the said second active waveguide 27 to be propagated towards the said first active waveguide 21.

Alternatively, in place of the optical beam splitter 28, it is possible to use a conventional optical isolator (not shown), located between the first end 211 of the first active waveguide 21 and the output of the second active waveguide 27, and capable of blocking the input of the said coherent optical signal 1000 into the said second active waveguide 27 while allowing the ASE generated by the said second active waveguide 27 to be propagated towards the said first active waveguide 21.

The second active waveguide 27, not having an optical signal at its input, emits from its output only spontaneous emission which then passes through the ports 2 and 1 of the optical beam splitter 28 and is propagated along the first active waveguide 21 from the end 211 to the end 212, increasing the power of the spontaneous emission in the optical-optical device 20 in the direction of counter-propagation with respect to the coherent optical signal 1000.

In turn, the coherent optical signal 1000 enters the optical-optical device 20, passes through the ports 1 and 2 of the optical beam splitter 22, is propagated along the first active waveguide 21 from the end 212 to the end 211, passes through the ports 1 and 3 of the optical beam splitter 28 and thus leaves the optical-optical device 20 through the second output 25.

As it passes through the active waveguide 21, the coherent optical signal 1000 modulates the gain of the said active waveguide 21, as a result of the phenomenon of cross-gain modulation, and thus transfers the digital information which it carries (with inverted logic) to the ASE generated in the first active waveguide 21 which has a high intensity, owing to the spontaneous emission from the second active waveguide 27.

The modulated ASE leaving the optical-optical device 20 through the first output 24 thus forms the highly incoherent optical signal 2000 which is sent to the optical beam splitter 30.

This last embodiment is particularly advantageous when, for example, the highly incoherent optical signal 2000 is required to have a power value greater than that of the ASE generated by the first active waveguide 21 only.

Larger quantities of ASE may also be obtained by increasing the length of the first active waveguide 21 and/or by increasing the power of its pumping source.

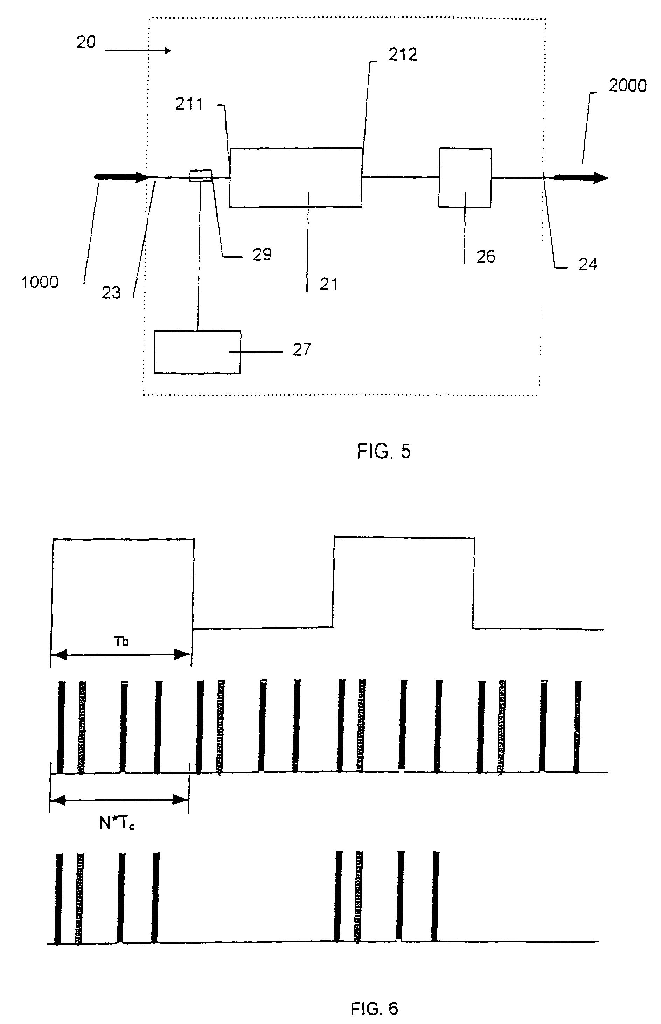

In a fourth embodiment (Fig. 5), the optical-optical device 20 has the same structural and functional characteristics (for which reference should therefore be made to the description above) as the second embodiment in Fig. 3, except for the fact that it also comprises a second active waveguide 27, optically connected to the first end 211 of the first active waveguide 21, and a conventional optical beam coupler 29 for simultaneously sending the ASE from the second active waveguide 27 and the coherent optical signal 1000 to the active waveguide 21.

In this embodiment, the coherent optical signal 1000 is co-propagating, as in the second embodiment in Fig. 3, with the part of the ASE which leaves the optical-optical device 20 through the first output 24 and is then eliminated at the output by the optical filter 26. Additionally, as in the third embodiment in Fig. 4, it transfers its digital information to the ASE generated in the first active waveguide 21 which has a high intensity owing to the spontaneous emission from the second active waveguide 27.

Returning now to the description of the optical apparatus 100, the optical beam splitter 30 clones the highly incoherent optical signal 2000 from the optical-optical device 20 into N highly incoherent optical signals, each having an intensity of 1/N times the intensity of the highly incoherent optical signal 2000 at its input. Each of the said N highly incoherent optical signals is then sent to the corresponding one of the said optical delay lines 40.

The optical beam splitter 30 is, for example, a 1xN fused fibre single beam splitter, or is formed by an equivalent number of 1x2 fused fibre beam splitters, arranged in a tree configuration is such a way as to produce a 1xN splitter.

Alternatively, the optical beam splitter 30 may be produced by other technologies such as that of integrated optics.

The optical delay lines 40 preferably consist of sections of optical fibre. Alternatively, when high bit rates are used, they may also be made by integrated optics technology.

Their lengths differ from each other. More particularly, the difference in length between one line and another is equal to a predetermined length $\Delta L$ or a multiple thereof. This length $\Delta L$ is selected, as described below, in accordance with a predetermined item of information which is to be recognized. Additionally, for operating in conditions of incoherence, the said predetermined length $\Delta L$ is much greater than the coherence length of the highly incoherent optical signal 2000.

The N highly incoherent optical signals, which are propagated in the N optical delay lines, are thus delayed with respect to each other by a fundamental time $\Delta T$ or a multiple thereof, where $\Delta T$ is equal to $\Delta L/v$ and v is the velocity of the optical signals in the optical delay lines.

When the said optical delay lines 40 are made in integrated optics technology, conventional thermo-optical length controllers ("heaters") - not shown - are preferably located at their outputs or alternatively along them, enabling the length of each line to be regulated accurately.

On the other hand, when the optical delay lines 40 consist of sections of optical fibre, a similar effect is obtained with conventional mechanical devices (stretchers), such as a suitable set of pulleys controlled by a stepping motor.

Typically, the said devices (heaters and stretchers) are controlled by a suitable electronic control circuit.

The optical coupler 50 recombines (adds in incoherent mode) the N highly incoherent optical signals delayed by the optical delay lines 40 into a single highly incoherent optical output signal 3000 having an intensity which, as described below, is at a maximum in the presence of a predetermined item of information which is to be selected.

The said optical coupler 50 consists, for example, of a single Nx1 fused fibre beam splitter or is formed from an equivalent number of 2x1 fused fibre beam splitters arranged in cascade in such a way as to produce an Nx1 splitter.

Alternatively, the optical coupler 50 may be produced by other technologies such as that of integrated optics.

The coherent optical signal 3000 is then processed by the comparator device 60 and sent by it to the output 70 of the apparatus 100.

In one embodiment, the comparator device 60 comprises a photodetector 61 and a threshold circuit 62. The photodetector 61 measures the intensity of the highly incoherent optical signal 3000 and converts it to a corresponding voltage value V. The threshold circuit 62 compares this voltage value V with a predetermined voltage threshold $V_{th}$.

The value of $V_{th}$ is selected from time to time, in a conventional way, according to the predetermined item of information which is to be selected.

Since the optical apparatus according to the invention operates with coherent optical signals at its input, it can be used in any of the currently known optical communication systems used for transmitting optical signals from coherent laser sources having, typically, coherence times of the order of a hundred picoseconds and coherence lengths of the order of tens of millimetres.

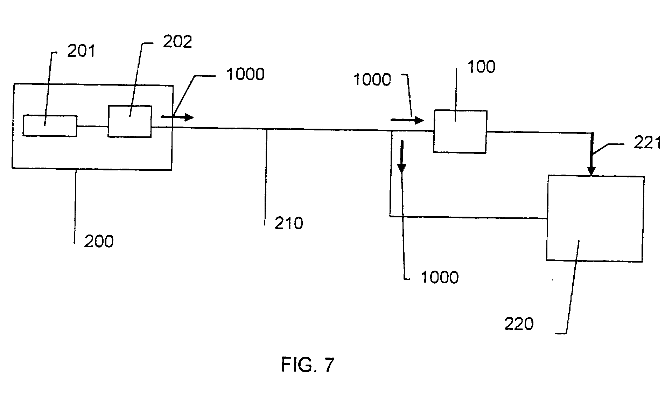

Fig. 7 shows an example of an optical communication system according to another aspect of the invention, which comprises at least one optical apparatus 100 according to the invention.

This system also comprises a transmitting apparatus 200, an optical transmission line 210 and a receiving apparatus 220.

The transmitting apparatus 200 is a conventional apparatus capable of transmitting the coherent optical signal 1000. Typically, it comprises a conventional laser source 201 for supplying a continuous optical signal 1000 at a wavelength typical of optical transmissions (1300-1600 nm) and a conventional modulator 202 capable of modulating the intensity of the said optical signal 1000 at a predetermined bit rate and in accordance with a set of digital data to be transmitted along the transmission line 210. Alternatively, the transmitting apparatus 200 may comprise a direct-modulation laser source.

The transmission line 210 typically comprises a conventional optical fibre inserted in an optical cable. Typical lengths of the said transmission line 210 are of the order of single kilometres or of tens of kilometres. When the said line comprises optical amplifiers, it typically has a length of the order of hundreds or thousands of kilometres.

The receiving apparatus 220 is an apparatus capable of processing the coherent optical signal 1000 according to the required applications.

In the example shown in Fig. 7, the optical apparatus 100 according to the invention is inserted in the transmission line 210 and is connected to the receiving apparatus 220. Part of the coherent optical signal 1000 from the transmission line 210 is sent to the optical apparatus 100 and part is sent to the receiving apparatus 220. The optical apparatus 100, after processing the part of the coherent optical signal 1000 at its input, sends the result 221 of the operation which it has carried out to the receiving apparatus 220 so that the latter can process it.

For example, in code division multiple access (CDMA) systems, the optical apparatus 100 is capable of recognizing, as will be explained subsequently, whether or not a "1" bit which arrives at its input is intended for the receiving apparatus 220, and sends the result 221 of this recognition to the said receiving apparatus 220. If recognition takes place, the receiving apparatus 220 thus receives the part of the said coherent optical signal 1000 which arrives at its input.

The optical communication system according to the invention may also comprise other devices such as optical amplifiers, adapters, opto-electronic regenerators, optical-optical regenerators, and switching nodes of an optical network, where a multiplicity of transmission lines converge and originate, according to criteria which will be evident from the present description to a person skilled in the art, and without departure from the principle of the invention.

With reference now to an example of application of the optical apparatus according to the invention, the apparatus may be used in an optical communication system in which coherent optical signals are transmitted, as an all-optical correlator for selecting a predetermined sequence of N bits from a flow of sequences of N bits.

This type of operation is required, for example, in the known code division multiple access (CDMA) transmission systems.

In CDMA systems, information is encoded by means of a special code which enables users who use the same transmission channel to be distinguished from each other. The maximum number of users who can use the same transmission channel is selected, from time to time, in accordance with various parameters such as the length of the bit sequences, the type of sequences used and the desired signal-noise ratio.

The information transmitted by each user is thus encoded by means of a suitable binary sequence, called the "chip sequence", which enables one user to be distinguished from another. More particularly, each bit having a duration $T_b$ corresponding to a logical "1" is encoded with the said chip sequence, while the bits corresponding to a logical "0" are not encoded. The chip sequence is therefore an encoding of the destination of a transmitted "1" bit.

Advantageously, the chip sequence is an orthogonal optical sequence [J. Salehi, "Code division multiple access techniques in optical fiber networks. Part 1: fundamental principles", IEEE Transactions on Communications, vol. 37, No. 8, August 1989, pp. 824-833; J. Salehi et al., "Code division multiple access techniques in optical fiber networks. Part 2: system performance analysis", IEEE Transactions on Communications, vol. 37, No. 8, August 1989, pp. 834-842].

The process of encoding a sequence of bits belonging to a predetermined user is shown in Fig. 6, where the top trace represents the sequence of bits, the middle trace represents the chip sequence having a repetition period of $T_b$, and the bottom trace represents the signal which is obtained as a result of encoding. As may be seen, the chip sequence consists of N bits, which are subsequently called "chips", having a chip time $T_c$ such that $T_b$ is equal to $N*T_c$.

Since the signal received by each user comprises data intended for other users as well, the user must recognize at the receiving point, among all the bits arriving at his input, those which are intended for him.

This selection is generally carried out by an operation of correlation between the bits arriving at a receiver and the chip sequence identifying this receiver.

The optical apparatus according to the invention, can be used to carry out this operation.

In this application, the number of optical delay lines 40 of the apparatus according to the invention is equal to the number of chips corresponding to a logical 1 present in the chip sequence which is to be selected, and the difference in length between these lines is selected in such a way that the said chips corresponding to a logical 1 appear superimposed on each other at the output of the said optical delay lines.

For example, when the chip sequence is 1001000100001 and $\Delta L_c$ is the length of a section of line capable of imparting to the optical signal a delay $\Delta T$ equal to the chip time $T_c$ ($\Delta L_c = T_c*v$, where v is the velocity of the highly incoherent optical signals in the optical delay lines), the apparatus according to the invention has 4 delay lines, of which

- the first has a length $L_1$ which is not critical for the purposes of the operation of the optical apparatus 100. For reasons of compactness, it preferably has a length $L_1$ capable of imparting a negligible delay to the optical signal which is propagated in it,
- the second has a length $L_2 = L_1 + 5*\Delta L_c$,
- the third has a length $L_3 = L_2 + 4*\Delta L_c$, and
- the fourth has a length $L_4 = L_3 + 3*\Delta L_c$.

Thus when the chip sequence is present at the input of the optical apparatus, the highly incoherent optical signal 3000 is at peak intensity. Conversely, when a sequence of bits other than the chip sequence is present, the optical signal 3000 has a lower intensity.

By suitably selecting the threshold of the comparator device 60 and by comparing the intensity of the optical signal 3000 with this threshold, it is therefore possible to determine whether or not a sequence of bits at the input of the optical apparatus was equal to the chip sequence.

At this point, it is also worth noting that, for operating in a condition of incoherence, $\Delta L_c$ must be much greater than the coherence length of the highly incoherent optical signal 2000, and that, for the aforesaid relation ($\Delta L_c = T_c*v$), the chip time $T_c$ must be much greater than the coherence time of the highly incoherent optical signal 2000.

Therefore, since the coherence time of the highly incoherent optical signal 2000 is of the order of a picosecond, the apparatus according to the invention can be used to process, in conditions of incoherence, even sequences of bits having bit times much lower than those typical of optical communication systems in which bit rates of 2.5, 10 and 40 Gbit/s (corresponding to bit times of 400, 100 and 25 ps respectively) are used.

The inventors of the present invention have made experimental measurements in order to verify the behaviour in this application of the optical apparatus according to the invention as an optical correlator of sequences of N bits.

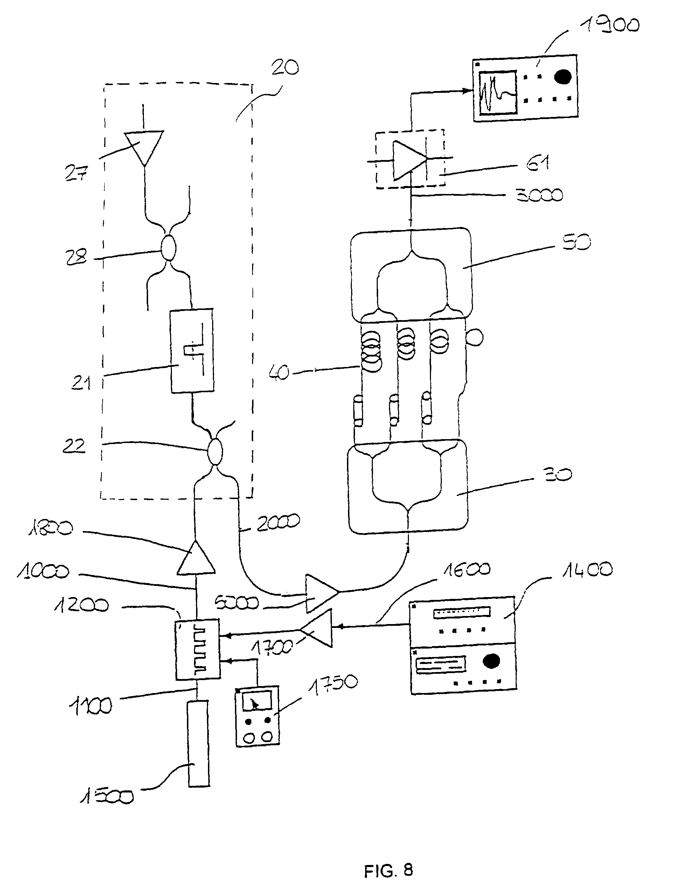

In a first series of measurements, the experimental set-up shown in Fig. 8 was used, in which the reference numbers previously used in Figures 1 to 5 have been used for the elements of the optical apparatus according to the invention.

As may be seen in Fig. 8, the coherent optical signal 1000 carrying the digital information was obtained with a Nortel LC-155CA-20 laser source 1500, which emits a continuous optical signal 1100 having a power of approximately 500 μW, a wavelength of approximate-ly 1550 nm, and a coherence time and length of approximately 100 ps and 2 cm respectively. The continuous optical signal 1100 leaving the laser 1500 was subsequently modulated by means of an electro-optical modulator of the Mach Zehnder type 1200, produced by the present applicant. This modulator 1200 was controlled by an electrical signal at radio frequency 1600 which was generated by a pattern generator made by HP (model 70841B) and a clock generator made by HP (model 8648C) (indicated jointly in the figure by the number 1400) and then amplified by a radio frequency amplifier 1700. Additionally, the said modulator 1200 was also controlled by a variable power supply unit 1750 to fix the operating point (bias).

The pattern used to modulate the continuous optical signal 1100 consisted of 30 bits, the first thirteen of which corresponded to the chip sequence 1001000100001, while the remainder were equal to zero. Additionally, a bit time (chip time $T_c$) and a bit rate (chip frequency $f_c$) of 400 ps and 2.5 Gbit/s respectively were used.

The coherent optical signal 1000 modulated in this way was subsequently amplified by an optical amplifier 1800 produced by the present applicant (Amplifos OP-980-F) to obtain a mean output power of approximately 1.32 mW. This optical amplifier 1800 had within it an optical isolator capable of preventing the ASE from the optical beam splitter 22 from entering the optical amplifier 1800.

The optical-optical device 20 according to the invention had the configuration shown in Fig. 4.

The device used as the second active guide 27 was an active fibre optical amplifier produced by the present applicant (Amplifos OP-980-F), which, when pumped with a suitable pump power and in the absence of an optical signal at its input, supplied at the input of the first active waveguide 21 an ASE having a power of approximately 71 μW and a coherence time and length of approximately 0.27 ps and 55 μm respectively. Additionally, the said optical amplifier had within it an optical isolator capable of preventing the coherent optical signal 1000 from entering the second active guide 27.

The optical beam splitter 28 was a 30/70 fused fibre splitter made by MP Fiber Optics.

The device used as the first active waveguide 21 was a semiconductor optical amplifier with a length of 500 μm, produced by Opto Speed and pumped with a current of 240 mA.

The optical beam splitter 22 was a 30/70 fused fibre splitter made by MP Fiber Optics.

Thus the highly incoherent optical signal 2000 at the output of the optical-optical device 20 had a coherence time and length of approximately 0.27 ps and 55 μm respectively.

This signal 2000 was subsequently amplified by an active fibre optical amplifier produced by the present applicant (Amplifos OP-980-F).

The optical beam splitter 30 consisted of 3 1x2 50/50 splitters, arranged in a tree configuration, and produced by MP Fiber Optics.

The optical delay lines 40 consisted of four sections of conventional optical fibre of the step index type.

The shortest section of fibre had a length $L_1$ equal to approximately 10 cm. Additionally, the differences in length between the various delay lines were as follows:

* $\Delta L_{1,2} = L_2 - L_1 = 5*\Delta L_c = 40.8$ cm;
* $\Delta L_{2,3} = L_3 - L_2 = 4*\Delta L_c = 32.7$ cm; and
* $\Delta L_{3,4} = L_4 - L_3 = 3*\Delta L_c = 24.5$ cm,

where $L_2$, $L_3$, $L_4$ denote the lengths of the second, third and fourth optical delay line respectively, and $\Delta L_c$ was equal to approximately 8.17 cm.

The delay lines were therefore such that it was possible to recognize the aforesaid chip sequence 1001000100001 and to carry out an autocorrelation operation when the chip sequence was present at the input of the apparatus and an operation of cross-correlation when a sequence of bits different from the chip sequence was present at the input of the apparatus.

The coupler 50 consisted of 3 1x2 50/50 splitters, arranged in a tree configuration and produced by MP Fiber Optics.

The highly incoherent optical signal 3000 at the output of the coupler 50 was subsequently converted into a corresponding electrical signal by means of a New Focus 1517 photodiode 61 having a band of 6 GHz. This electrical signal was observed by means of a high-speed sampling digital oscilloscope 1900 made by Tektronix (model 11801B D.O.).

The various power values present at the various points of the experimental set-up were as follows:

| | | |
|---|---|---|
| $P_A$ | = | 71 μW |
| $P_B$ | = | 130 μW |
| $P_C$ | = | 1.32 mW |
| $P_D$ | = | 11.4 mW |
| $P_E$ | = | 1.5 mW |

where $P_A$ is the power of the spontaneous emission from the second active waveguide 27 at the input of the first active waveguide 21, $P_B$ is the mean power of the ASE at the input of the optical amplifier 5000, $P_C$ is the mean power of the coherent optical signal 1000 at the output of the optical amplifier 1800, $P_D$ is the mean power of the highly incoherent optical signal 2000 at the input of the beam splitter 30 and $P_E$ is the mean power of the highly incoherent optical signal 3000 at the input of the photodiode 61.

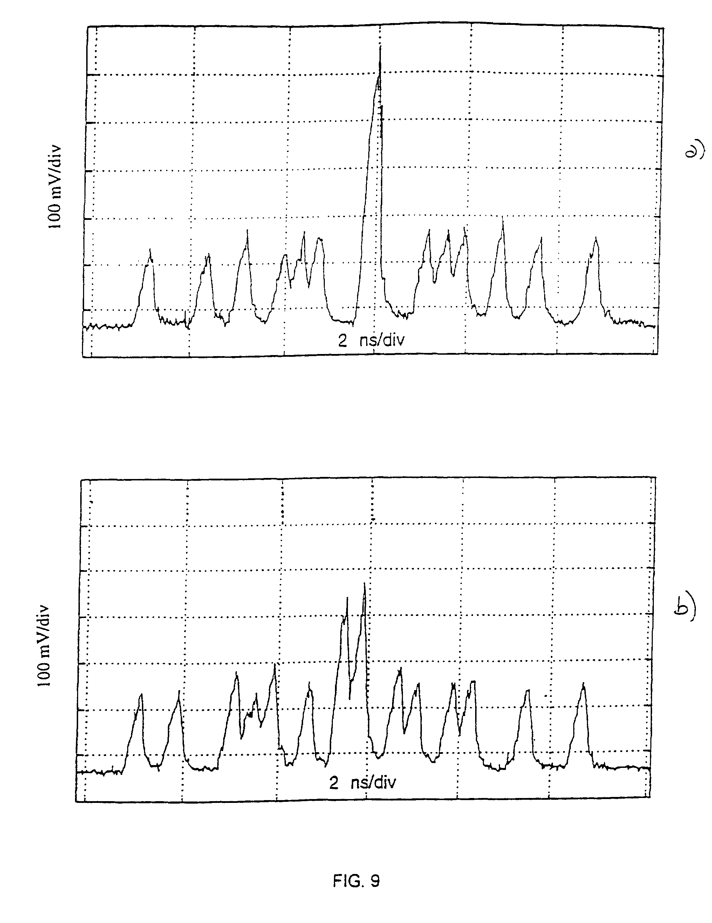

The results obtained from this first set of measurements are shown in Fig. 9.

This shows the waveforms of the electrical signal displayed by the Tektronix digital oscilloscope when the following were present at the input of the apparatus:

- a sequence equal to the chip sequence 1001000100001 (Fig. 9a, result of an auto-correlation operation); and
- a sequence equal to 1010001000001 (Fig. 9b, result of an operation of cross-correlation between the chip sequence and a sequence equal to 1010001000001).

Both of these waveforms were found to be substantially stable in time.

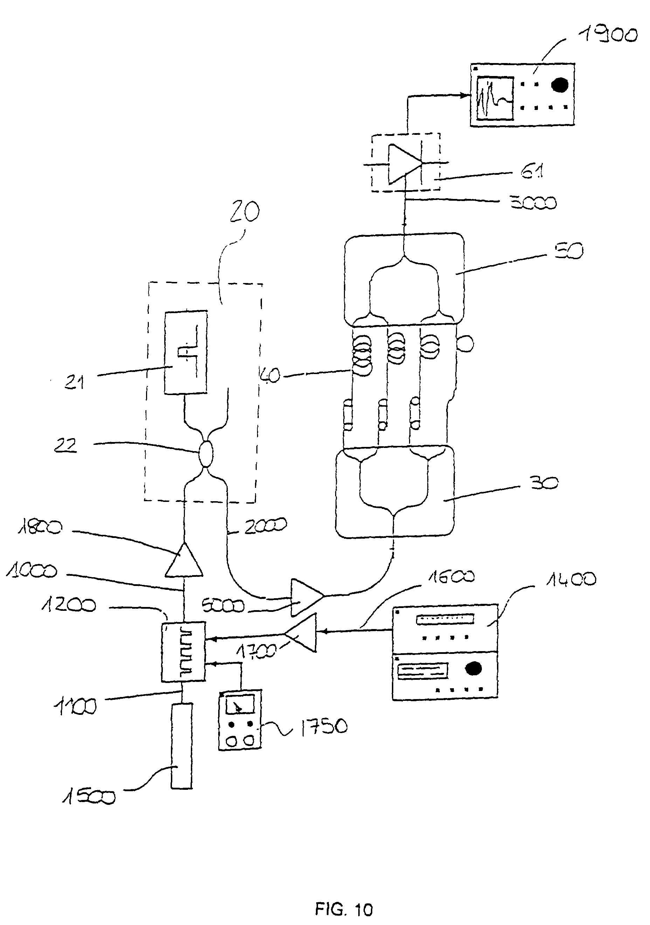

A second series of experimental measurements was then carried out, using the set-up shown in Fig. 10, which is identical to that in Fig. 8 except for the fact that the optical-optical device 20 according to the invention had the configuration shown in Fig. 2.

More particularly, the set-up in Fig. 10 differed from that in Fig. 8 in that it did not have the second active waveguide 27 or the optical beam splitter 28.

Additionally, the various power values present at the various points of the experimental set-up were as follows:

| | | |
|---|---|---|
| $P_B$ | = | 64 μW |
| $P_C$ | = | 1.32 mW |
| $P_D$ | = | 10 mW |
| $P_E$ | = | 1.3 mW |

where $P_B$ is the mean power of the ASE at the input of the optical amplifier 5000, $P_C$ is the mean power of the coherent optical signal 1000 at the output of the optical amplifier 1800, $P_D$ is the mean power of the highly incoherent optical signal 2000 at the input of the beam splitter 30 and $P_E$ is the mean power of the highly incoherent optical signal 3000 at the input of the photodiode 61.

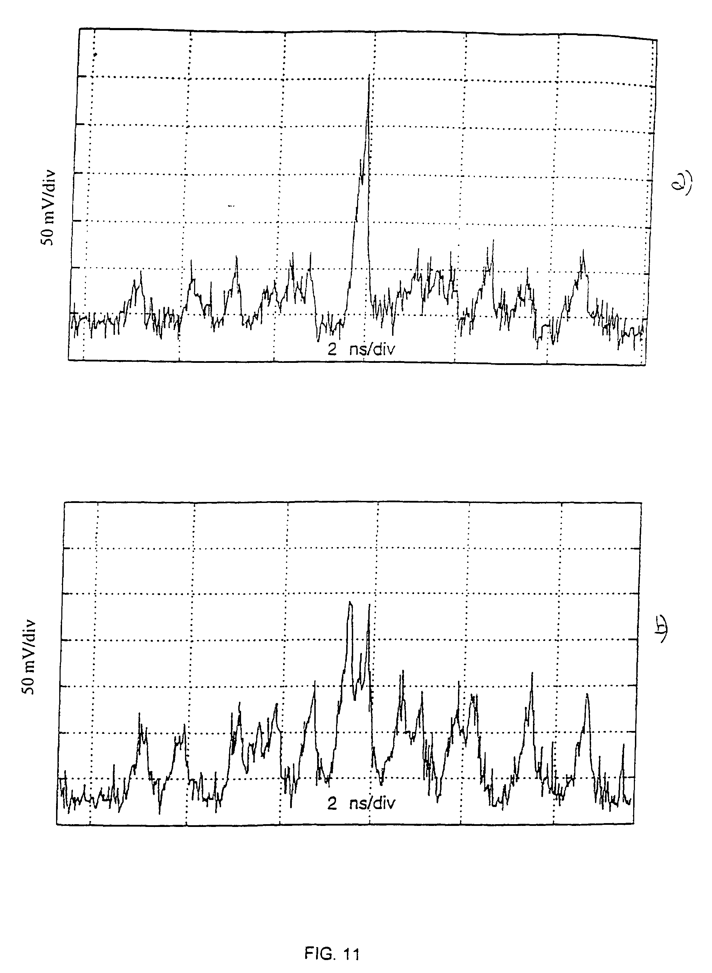

The results are shown in Figure 11, which shows the waveforms of the electrical signal displayed by the Tektronix digital oscilloscope when the following were present at the input of the apparatus:

- a sequence equal to the chip sequence 1001000100001 (Fig. 11a, result of an auto-correlation operation); and
- a sequence equal to 1010001000001 (Fig. 11b, result of an operation of cross-correlation between the chip sequence and a sequence equal to 1010001000001).

In this case also, both of the waveforms obtained in this way were found to be substantially stable in time.

When the waveforms in Fig. 9 are compared with those in Fig. 11, it may be noted that a smaller signal-noise ratio was obtained in the second series of measurements than in the first series of measurements. Although the cause of this result has not yet been fully explained, the inventors of the present invention consider that the result was due to the fact that the power level of the incoherent optical signal 2000 available at the output of the optical-optical device shown in Fig. 2 (used in the second series of measurements) was lower than that available at the output of the optical-optical device shown in Fig. 4 (used in the first series of measurements).

For the purpose of comparison, a third series of experimental measurements was then carried out with a comparison optical apparatus in which an intensity modulated coherent optical signal was sent directly to an optical delay line filter operating in incoherent conditions.

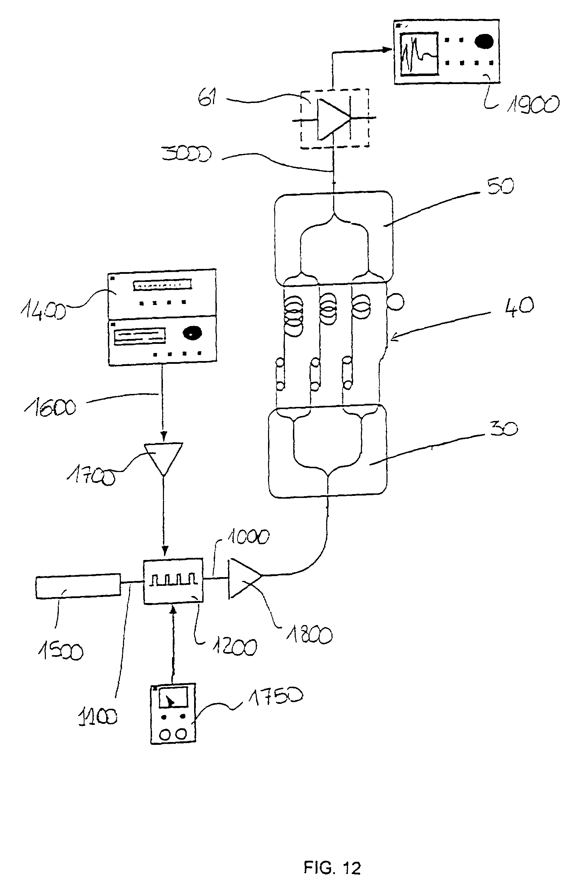

The experimental set-up (shown in Fig. 12) used in this third series of measurements is identical to that in Fig. 8 except for the fact that the optical-optical device 20 was absent and the coherent optical signal 1000 was thus sent directly to the input of the optical beam splitter 30.

In this case also, the Tektronix digital oscilloscope was used to display the waveforms of the electrical signal at the output of the photodiode 61 when the following were present at the input of the comparison optical apparatus:

- a sequence equal to the chip sequence 1001000100001 (result of an auto-correlation operation); and
- a sequence equal to 1010001000001 (result of an operation of cross-correlation between the chip sequence and a sequence equal to 1010001000001).

The waveforms obtained in this way were found to be very unstable in time by comparison with those obtained in the preceding two experimental tests carried out with the apparatus according to the invention.

Additionally, they had, within the band (6 GHz) of the photodiode 61, high-intensity noise components which were virtually absent from the waveforms displayed in Figures 9 and 11.

In applications in which the intensity of the output signal is compared with a predetermined threshold of intensity by a comparator device, the fluctuations in time of this output signal and the presence of the aforesaid noise components make the selection of the level of the said threshold very difficult and make the result of the comparison operation very unreliable.

The apparatus according to the invention, which does not have these disadvantages, is therefore greatly preferable to a conventional optical delay line filter which operates in incoherent conditions and directly processes an incoming coherent optical signal.

In another application, the optical apparatus according to the invention may also be used in a digital optical transmission network, where the information is sent in the form of sequences of bits having predetermined lengths (frames) in association with a device capable of recovering the frame start synchronization.

In such a network, the time interval between the start of one frame and the next is the frame time $T_t$, and the frame frequency $f_t$ is equal to $1/T_t$.

It is necessary to recover the frame synchronization, in other words to have a synchronizing signal which indicates the start of each frame, in the receiving apparatus and within each node of this type of network. This synchronizing signal is used for decoding the received sequence of bits at the time of reception, and for switching the data flows at the nodes of the network.

Generally, the synchronization is recovered by introducing between one frame and the next a predetermined sequence of bits (flag) which is subsequently recognized at the nodes and in the receiving apparatus by a suitable recognition device.

The said recognition device is preferably an asynchronous all-optical device which supplies an optical output signal having peaks at the points of recognition of flags [G. Maier et al., "Free-space architecture for an ATM header processing function", Proceedings - Optics in Computing 1998, pp. 127-130; European patent application No. 98202411.9 filed in the name of the present applicant].

This device, however, is unable to distinguish the flags, which arrive at its input with a frame frequency $f_t$, from the sequences of bits which contain the digital information to be transmitted and which at random intervals are identical to the said flags ("out of frequency" sequences). The optical signal at the output of this recognition device may therefore have erroneous peaks which are randomly distributed ("out of frequency"), due to these "false recognitions".

The optical apparatus 100 according to the invention can be used in association with this flag recognition device to select only those peaks which are delayed by $T_t$ with respect to each other.

In this application, the said plurality of optical delay lines 40 of the optical apparatus 100 delays the said N highly incoherent optical signals with respect to each other by a quantity equal to the frame time $T_t$ or to a whole-number multiple of this. More particularly, the length of the i-th optical delay line is selected in such a way as to delay the i-th signal which is propagated in it by a time $\tau_i = (i-1)*T_t + T_1$, where $1 \leq i \leq N$ and $T_1$ is the delay (which may take any value, preferably the lowest possible) introduced by the first optical delay line.

Each of the said N highly incoherent optical signals, which are delayed with respect to each other by a time equal to $T_t$ or a whole-number multiple of this, has an intensity equal to 1/N times the intensity of the highly incoherent optical signal 2000 at the input of the 1xN optical beam splitter 30. Consequently, when the optical apparatus 100 is operating in normal conditions, the intensity of the highly incoherent optical signal 3000 at the output of the coupler 50 will be equal to that of the said highly incoherent optical signal 2000 when a peak with a frame frequency $f_t$ enters the input of the optical apparatus 100. Conversely, when an out-of-frequency peak (not belonging to a regular sequence of peaks delayed by $T_t$) enters the input of the optical apparatus 100 owing to a "false recognition", the intensity of the said highly incoherent optical signal 3000 will be lower. Typically, the intensity of the said highly incoherent optical signal 3000 corresponding to the out-of-frequency peaks is reduced by a factor N with respect to that corresponding to the peaks with the frame frequency $f_t$.

By comparing the value of the intensity of the said highly incoherent optical signal 3000 with a suitably selected threshold voltage $V_{th}$, the comparator device 60 will therefore be capable of selecting only those peaks which are delayed by $T_t$ with respect to each other.

Additionally, when the flag recognition device is a conventional optical correlator of sequences of bits, the synchronizing signal will comprise, in addition to the "out-of-frequency" peaks caused by the aforesaid false recognitions, pulses which have a lower intensity than that of the said peaks and which are the result of operations of cross-correlation between the flags which are to be recognized and all the other possible sequences of N bits arriving at the input of the correlator.

In this case also, the intensity of the said highly incoherent optical signal 3000 in the presence of the said cross-correlation pulses will be much lower than in the presence of the said peaks with the frame frequency $f_t$. In the comparator device 60, these cross-correlation pulses will therefore be easily distinguishable from the said peaks with the frame frequency $f_t$.

**Claims**

1. Optical apparatus (100) for selecting a predetermined item of information from a coherent optical signal (1000) carrying a set of digital data, the said optical apparatus (100) comprising:

   - an input (10) for the said coherent optical signal (1000);
   - an optical-optical device (20) connected to the said input (10) for propagating the said coherent optical signal (1000), the said optical-optical device (20) being capable of generating a highly incoherent light having a predetermined coherence time and of transferring the said set of digital data carried by the said coherent optical signal (1000) to the said highly incoherent light in such a way as to provide at its output a highly incoherent optical signal (2000) carrying the said set of digital data,
   - an optical beam splitter (30) for cloning the said highly incoherent optical signal (2000) into at least two highly incoherent optical signals, the said optical beam splitter (30) having an input connected to the said optical-optical device (20) and at least two outputs for the said at least two highly incoherent optical signals;
   - at least two optical delay lines (40) connected to the said at least two outputs of the said optical beam splitter (30), the said at least two optical delay lines (40) having different wavelengths from each other, the difference in length between the said at least two optical delay lines (40) being such that the said at least two highly incoherent optical signals are delayed with respect to each other by a predetermined time, the said predetermined time being greater than the said predetermined coherence time of the said highly incoherent optical signal and being chosen in accordance with the said predetermined item of information which is to be selected;
   - an optical coupler (50) with at least two inputs connected to the said at least two optical delay lines (40), and one output, the said coupler being capable of recombining the said at least two highly incoherent optical signals into a single highly incoherent optical output signal (3000) having an intensity which is at a maximum in the presence of the said predetermined item of information which is to be selected.

2. Optical apparatus (100) according to Claim 1, **characterized in that** the said predetermined time, chosen in accordance with the said predetermined item of information which is to be selected, is equal to a fundamental time $\Delta T$ or to a whole-number multiple thereof.

3. Optical apparatus (100) according to Claim 1 or 2, **characterized in that** the said coherent optical signal (1000) is intensity modulated in accordance with the said set of digital data.

4. Optical apparatus (100) according to any of the preceding Claims 1 to 3, **characterized in that** the said optical-optical device (20) comprises

   - an input (23) for the said coherent optical signal (1000);
   - an active waveguide (21) optically connected to the said input (23) for the propagation of the said coherent optical signal (1000), the said active waveguide (21) having a first (211) and a second (212) end and being capable of generating highly incoherent light;
   - a pump source for pumping the said active waveguide (21) and obtaining a predetermined gain; and

- an output (24) optically connected to the said second end (212) of the said active waveguide (21) for the output of at least part of the said highly incoherent light;

the said coherent optical signal (1000) having a power and a wavelength selected in such a way that the said set of digital data which it carries is transferred to the said highly incoherent light during its propagation in the said active waveguide (21).

5. Optical apparatus (100) according to Claim 4, **characterized in that** the said power and the said wavelength of the said coherent optical signal (1000) are selected in such a way as to saturate the said predetermined gain of the said active waveguide (21).

6. Optical apparatus (100) according to Claim 4 or 5, **characterized in that** the said active waveguide (21) is of the semiconductor type.

7. Optical apparatus (100) according to any of Claims 4 to 6, **characterized in that** the quantity of the said highly incoherent light may be increased by connecting another highly incoherent light source to the said first end (211) of the said active waveguide (21).

8. Optical apparatus (100) according to any of Claims 4 to 7, **characterized in that**

   - the said input (23) is optically connected to the said first end (211) of the said active waveguide (21);
   - the said coherent optical signal (1000) and at least part of the said highly incoherent light are propagated in the said active waveguide (21) from the said first end (211) towards the said second end (212); and
   - the said optical-optical device (20) additionally comprises a suitable optical filter (26) associated with the said output (24) and capable of eliminating the said coherent optical signal (1000) after it has been propagated along the said active waveguide (21).

9. Optical apparatus (100) according to any of Claims 4 to 7, **characterized in that**

   - the said second end (212) of the said active waveguide (21) is also optically connected to the said input (23);
   - the said coherent optical signal (1000) is propagated in the said first waveguide (21) from the said second end (212) towards the said first end (211); and
   - the said highly incoherent light is propagated at least partially in the said active waveguide (21) from the said first end (211) towards the said second end (212).

10. Optical transmission system comprising

   a) a transmitting apparatus (200) for transmitting a coherent optical signal (1000) carrying a set of digital data;
   b) an optical transmission line (210) connected to the said transmitting apparatus (200) for propagating the said coherent optical signal (1000);
   c) a receiving apparatus (220) connected to the said optical transmission line (210);
   d) an optical apparatus (100) associated with the said optical transmission line (210) for selecting a predetermined item of information from the said coherent optical signal (1000), the said optical apparatus (100) comprising

   - an input (23) for at least part of the said coherent optical signal (1000);
   - an optical-optical device (20) connected to the said input (23) for propagating the said at least part of the said coherent optical signal (1000), the said optical-optical device (20) being capable of generating a highly incoherent light and of transferring the said set of digital data carried by the said coherent optical signal (1000) to the said highly incoherent light in such a way as to produce at its output a highly incoherent optical signal (2000) carrying the said set of digital data;
   - an optical beam splitter (30) for cloning the said highly incoherent optical signal (2000) into at least two highly incoherent optical signals, the said optical beam splitter (30) having an input connected to the said optical-optical device (20) and at least two outputs for the said at least two highly incoherent optical signals;
   - at least two optical delay lines (40) connected to the said at least two outputs of the said optical beam splitter (30), the said at least two optical delay lines (40) having different lengths from each other, the difference in length between the said at least two optical delay lines (40) being such as to delay one of the said at least two highly incoherent optical signals by a predetermined time with respect to the other, the said predetermined time being longer than the said predetermined coherence time of the said highly incoherent light and being chosen in accordance with the said predetermined item of information which is to be selected;
   - an optical coupler (50) with at least two inputs connected to the said at least two optical delay lines (40) and one output, the said coupler being capable of recombining the said at least two highly incoherent optical signals into a single highly incoherent optical output signal (3000) having an intensity which is maximum in the presence of the said predetermined item of information which is to be selected.

11. Method for selecting a predetermined item of information from a coherent optical signal carrying a set of digital data, the said method comprising the phases of

a) generating a highly incoherent light having a predetermined coherence time;

b) transferring the said set of digital data from the said coherent optical signal to the said highly incoherent light in such a way as to obtain a highly incoherent optical signal carrying the said set of digital data;

c) cloning the said highly incoherent optical signal into at least two highly incoherent optical signals;

d) delaying one of the said at least two highly incoherent optical signals by a predetermined time with respect to the other, the said predetermined time being longer than the said predetermined coherence time of the said highly incoherent light and being chosen in accordance with the said predetermined item of digital information which is to be selected;

e) recombining the said two highly incoherent optical signals into a single highly incoherent optical output signal having an intensity which is maximum in the presence of the said predetermined item of information which is to be selected.

**Patentansprüche**

1. Optisches Gerät (100) zum Auswählen eines vorbestimmten Informationssatzes aus einem kohärenten optischen Signal (1000), welches einen Digitaldatensatz trägt, wobei das optische Gerät (100) aufweist:

- einen Eingang (10) für das kohärente optische Signal (1000);
- eine Optik-Optik-Einrichtung (20), welche mit dem Eingang (10) zum Ausbreiten des kohärenten optischen Signals (1000) verbunden ist, wobei die Optik-Optik-Einrichtung (20) in der Lage ist, ein hoch inkokärentes Licht zu erzeugen, welches eine vorbestimmte Kohärenzzeit hat und den Digitaldatensatz, welcher von dem kohärenten optischen Signal (1000) getragen wird, an das hoch inkokärente Licht in einer solchen Weise zu übertragen, so daß an seinem Ausgang ein hoch inkokärentes optisches Signal (2000) geliefert wird, welches den Digitaldatensatz trägt,

- einen optischen Strahlteiler (30) zum Klonen des hoch inkokärenten optischen Signals (2000) in wenigstens zwei hoch inkokärente optische Signale, wobei der optische Strahlteiler (30) einen Eingang hat, welcher mit der Optik-Optik-Einrichtung (20) verbunden ist und wenigstens zwei Ausgänge für die wenigstens zwei hoch inkokärenten optischen Signale hat;

- wenigstens zwei optische Verzögerungsleitungen (40), welche mit den wenigstens zwei Ausgängen des optischen Strahlteilers (30) verbunden sind, wobei die wenigstens zwei optischen Verzögerungsleitungen (40) voneinander unterschiedliche Wellenlängen haben, wobei der Längenunterschied zwischen den wenigstens zwei optischen Verzögerungsleitungen (40) derart ist, daß die wenigstens zwei hoch inkokärenten optischen Signale um eine vorbestimmte Zeit in Bezug zueinander verzögert sind, wobei die vorbestimmte Zeit größer als die vorbestimmte Kohärenzzeit des hoch inkokärenten optischen Signales ist und entsprechend mit dem vorbestimmten Informationssatz, welcher auszuwählen ist, gewählt wird;

- einen optischen Koppler (50), welcher mit wenigstens zwei Eingängen mit den wenigstens zwei optischen Verzögerungsleitungen (40) verbunden ist, und mit einem Ausgang, wobei der Koppler in der Lage ist, die wenigstens zwei hoch inkokärenten optischen Signale in ein einzelnes hoch inkokärentes optisches Ausgangssignal (3000) zu rekombinieren, welches eine Intensität aufweist, welche in Gegenwart des vorbestimmten Informationssatzes, welcher auszuwählen ist, ein Maximum aufweist.

2. Optisches Gerät (100) nach Anspruch 1, **dadurch gekennzeichnet, daß** die vorbestimmte Zeit, welche entsprechend dem vorbestimmten Informationssatz, welcher auszuwählen ist, gewählt wird, gleich einer Grundzeit ΔT oder einem ganzzahligen Vielfachen dieser ist.

3. Optisches Gerät (100) nach Anspruch 1 oder 2, **dadurch gekennzeichnet, daß** das kohärent optische Signal (1000) entsprechend mit dem Digitaldatensatz intensitätsmoduliert ist.

4. Optisches Gerät (100) nach einem der vorausgehenden Ansprüche 1 bis 3, **dadurch gekennzeichnet, daß** die Optik-Optik-Einrichtung (20) aufweist

- einen Eingang (23) für das kohärente optische Signal (1000);
- einen aktiven Wellenleiter (21), welcher optisch mit dem Eingang (23) zur Ausbreitung des kohärenten optischen Signals (1000) verbunden ist, wobei der aktive Wellenleiter (21) ein erstes (211) und ein zweites (212) Ende aufweist, und in der Lage ist, hoch inkokärentes Licht zu erzeugen;
- eine Pumpquelle zum Pumpen das aktiven Wellenleiters (21) und zum Erhalten einer vorbestimmten Verstärkung; und
- einen Ausgang (24), welcher optisch mit dem zweiten Ende (212) das aktiven Wellenleiters (21) verbunden ist, um wenigstens einen Teil das hoch inkokärenten Lichtes auszugeben;

wobei das kohärente optische Signal (1000) eine Leistung und eine Wellenlänge hat, welche in einer derartigen Weise ausgewählt wird, daß der Digitaldatensatz, welchen es trägt, zu dem hoch inkokärenten Licht während seiner Ausbreitung in dem aktiven Wellenleiter (21) übertragen wird.

5. Optisches Gerät (100) nach Anspruch 4, **dadurch gekennzeichnet, daß** die Leistung und die Wellenlänge das kohärenten optischen Signals (1000) in einer derartigen Weise ausgewählt werden, um die vorbestimmte Verstärkung das aktiven Wellenleiters (21) zu sättigen.

6. Optisches Gerät (100) nach Anspruch 4 oder 5, **dadurch gekennzeichnet, daß** der aktive Wellenleiter (21) vom Halbleitertyp ist.

7. Optisches Gerät (100) nach einem der Ansprüche 4 bis 6, **dadurch gekennzeichnet, daß** die Menge des hoch inkokärenten Lichtes durch Verbinden mit einer anderen hoch inkokärenten Lichtquelle mit dem ersten Ende (211) des aktiven Wellenleiters (21) vergrößert werden kann.

8. Optisches Gerät (100) nach einem der Ansprüche 4 bis 7, **dadurch gekennzeichnet, daß**

- der Eingang (23) optisch mit dem ersten Ende (211) des aktiven Wellenleiters (21) verbunden ist;
- das kohärente optische Signal (1000) und wenigstens ein Teil des hoch inkokärenten Lichtes in dem aktiven Wellenleiter (21) von dem ersten Ende (211) in Richtung des zweiten Endes (212) sich ausbreiten; und
- die Optik-Optik-Einrichtung (20) zusätzlich ein geeignetes optisches Filter (26) aufweist, welches mit dem Ausgang (24) angeordnet ist und welches in der Lage ist, das kohärente optische Signal (1000) zu eliminieren, nachdem es sich entlang des aktiven Wellenleiters (21) ausgebreitet hat.

9. Optisches Gerät (100) nach einem der Ansprüche 4 bis 7, **dadurch gekennzeichnet, daß**

- das zweite Ende (212) des aktiven Wellenleiters (21) auch optisch mit dem Eingang (23) verbunden ist;
- das kohärente optische Signal (1000) in dem ersten Wellenleiter (21) von dem zweiten Ende (212) in Richtung des ersten Endes (211) sich ausbreitet; und
- das hoch inkokärente Licht sich wenigstens teilweise in dem aktiven Wellenleiter (21) von dem ersten Ende (211) in Richtung des zweiten Endes (212) ausbreitet.

10. Optisches Übertragungssystem, welches aufweist

a) ein Übertragungsgerät (200) zum Übertragen eines kohärenten optischen Signals (1000), welches einen Digitaldatensatz trägt;

b) eine optische Übertragungsleitung (210), welche mit dem Übertragungsgerät (200) zum Ausbreiten des kohärenten optischen Signals (1000) verbunden ist;

c) ein Empfangsgerät (220), welches mit der optischen Übertragungsleitung (210) verbunden ist;

d) ein optisches Gerät (100), welches mit der optischen Übertragungsleitung (210) zum Auswählen eines vorbestimmten Informationssatzes aus dem kohärenten optischen Signal (1000) angeordnet ist, wobei das optische Gerät (100) aufweist:

- einen Eingang (23) für wenigstens einen Teil des kohärenten optischen Signals (1000);
- eine Optik-Optik-Einrichtung (20), welche mit dem Eingang (23) zum Ausbreiten des wenigstens einen Teils des kohärenten optischen Signals (1000) verbunden ist, wobei die Optik-Optik-Einrichtung (20) in der Lage ist, ein hoch inkokärentes Licht zu erzeugen und den Digitaldatensatz, welcher von dem kohärenten optischen Signal (1000) getragen wird, an das hoch inkokärente Licht zu übertragen, in einer derartigen Weise, um an seinem Ausgang ein hoch inkokärentes optisches Signal (2000), welches den Digitaldatensatz trägt, zu erzeugen;
- einen optischen Strahlteiler (30) zum Klonen des hoch inkokärenten optischen Signals (2000) in wenigstens zwei hoch inkokärente optische Signale, wobei der optische Strahlteiler (30) einen Eingang hat, welcher mit der Optik-Optik-Einrichtung (20) verbunden ist und wenigstens zwei Ausgänge für die wenigstens zwei hoch inkokärenten optischen Signale hat;

- wenigstens zwei optische Verzögerungsleitungen (40), welche mit den wenigstens zwei Ausgängen des optischen Strahlteilers (30) verbunden sind, wobei die wenigstens zwei optischen Verzögerungsleitungen (40) voneinander unterschiedliche Wellenlängen haben, wobei der Längenunterschied zwischen den beiden optischen Verzögerungsleitungen (40) derart ist, daß eines der wenigstens zwei hoch inkokärenten optischen Signale um eine vorbestimmte Zeit mit Bezug zueinander verzögert wird, wobei die vorbestimmte Zeit länger als die vorbestimmte Kohärenzzeit des hoch inkokärenten Lichtes ist und wobei sie entsprechend dem vorbestimmten Informationssatz, welcher auszuwählen ist, gewählt wird;

- einen optischen Koppler (50) mit wenigstens zwei Eingängen, welche mit den wenigstens zwei optischen Verzögerungsleitungen (40) verbunden sind, und mit einem Ausgang, wobei der Koppler in der Lage ist, die wenigstens zwei hoch inkokärenten optischen Signale in ein einzelnes hoch inkokärentes optisches Ausgangssignal (3000) zu rekombinieren, welches eine Intensität aufweist, welche in Gegenwart des vorbestimmten Informationssatzes, welcher auszuwählen ist, ein Maximum hat.

**11.** Verfahren zum Auswählen eines vorbestimmten Informationssatzes aus einem kohärenten optischen Signal, welches einen Digitaldatensatz trägt, wobei das Verfahren die Phasen aufweist:

a) Erzeugen eines hoch inkokärenten Lichtes, welches eine vorbestimmte Kohärenzzeit hat;

b) Übertragen des Digitaldatensatzes von dem kohärenten optischen Signal an das hoch inkokärente Licht in einer derartigen Weise, daß ein hoch inkokärentes optisches Signal erhalten wird, welches den Digitaldatensatz trägt;

c) Klonen des hoch inkokärenten optischen Signals in wenigstens zwei hoch inkokärente optische Signale;

d) Verzögern eines der wenigstens zwei hoch inkokärenten optischen Signale um eine vorbestimmte Zeit mit Bezug zueinander, wobei die vorbestimmte Zeit länger als die vorbestimmte Kohärenzzeit des hoch inkokärenten Lichtes ist und entsprechend dem vorbestimmten Digitalinformationssatz, welcher auszuwählen ist, gewählt wird;

e) Rekombinieren der zwei hoch inkokärenten optischen Signale in ein einzelnes hoch inkokärentes optisches Ausgangssignal, welches eine Intensität aufweist, welche ihr Maximum in Gegenwart des vorbestimmten Informationssatzes, welcher auszuwählen ist, hat.

## Revendications

**1.** Appareil optique (100) permettant de sélectionner un élément prédéterminé d'information dans un signal optique cohérent (1000) transportant un ensemble de données numériques, ledit appareil optique (100) comprenant :

- une entrée (10) destinée audit signal optique cohérent (1000) ;

- un dispositif optique-optique (20) connecté à ladite entrée (10) et servant à propager ledit signal optique cohérent (1000), ledit dispositif optique-optique (20) étant en mesure de produire une lumière fortement incohérente qui possède un temps de cohérence prédéterminé et de transférer ledit ensemble de données numériques transporté par ledit signal optique cohérent (1000) à ladite lumière fortement incohérente de manière à produire, à sa sortie, un signal optique fortement incohérent (2000) transportant ledit ensemble de données numériques,

- un séparateur de faisceau optique (30) servant à cloner ledit signal optique fortement incohérent (2000) en au moins deux signaux optiques fortement incohérents, ledit séparateur de faisceau optique (30) ayant une entrée connectée audit dispositif optique-optique (20) et au moins deux sorties destinées auxdits deux ou plus de deux signaux optiques fortement incohérents ;

- au moins deux lignes à retard optiques (40) connectées auxdites deux ou plus de deux sorties dudit séparateur de faisceau optique (30), lesdites deux ou plus de deux lignes à retard optiques (40) ayant des longueurs d'onde différentes les unes des autres, la différence de longueur entre lesdites deux ou plus de deux lignes à retard optiques (40) étant telle que lesdits deux ou plus de deux signaux optiques incohérents sont retardés les uns par rapport aux autres d'un temps prédéterminé, ledit temps prédéterminé étant plus grand que ledit temps de cohérence prédéterminé dudit signal optique fortement incohérent et étant choisi en fonction dudit élément prédéterminé d'information qui doit être sélectionné ;

- un coupleur optique (50) ayant au moins deux entrées connectées auxdites deux ou plus de deux lignes à retard optiques (40), et une unique sortie, ledit coupleur étant en mesure de recombiner lesdits deux ou plus de deux signaux optiques fortement incohérents en un unique signal de sortie optique fortement incohérent (3000) qui présente une intensité qui est maximale en présence dudit élément prédéterminé d'information qui doit être sélectionné.

2. Appareil optique (100) selon la revendication 1, **caractérisé en ce que** ledit temps prédéterminé, choisi en fonction de l'élément prédéterminé d'information qui doit être sélectionné, est égal à un temps fondamental $\Delta T$ ou un multiple entier de celui-ci.

3. Appareil optique (100) selon la revendication 1 ou 2, **caractérisé en ce que** ledit signal optique cohérent (1000) est modulé en intensité en fonction dudit ensemble de données numériques.

4. Appareil optique (100) selon l'une quelconque des revendications 1 à 3, **caractérisé en ce que** ledit dispositif optique-optique (20) comprend :

   - une entrée (23) destinée audit signal optique cohérent (1000) ;
   - un guide d'ondes actif (21) optiquement connecté à ladite entrée (23) et servant à la propagation dudit signal optique cohérent (1000), ledit guide d'ondes actif (21) ayant une première extrémité (211) et une deuxième extrémité (212) et étant en mesure de produire une lumière fortement incohérente ;
   - une source de pompage servant à pomper ledit guide d'ondes actif (21) et à obtenir un gain prédéterminé ; et
   - une sortie (24) optiquement connectée à ladite deuxième extrémité (212) dudit guide d'ondes actif (21) et servant à la sortie d'au moins une partie de ladite lumière fortement incohérente ;
   - ledit signal optique cohérent (1000) ayant une puissance et une longueur d'onde sélectionnées de manière que ledit ensemble de données numériques qu'il transporte soit transféré à ladite lumière fortement incohérente pendant sa propagation dans ledit guide d'ondes actif (21).

5. Appareil optique (100) selon la revendication 4, **caractérisé en ce que** ladite puissance et ladite longueur d'onde dudit signal optique cohérent (1000) sont sélectionnées de manière à saturer ledit gain prédéterminé dudit guide d'ondes actif (21).

6. Appareil optique (100) selon la revendication 4 ou 5, **caractérisé en ce que** ledit guide d'ondes actif (21) est du type à semiconducteur.

7. Appareil optique (100) selon l'une quelconque des revendications 4 à 6, **caractérisé en ce qu'**on peut augmenter la quantité de ladite lumière fortement incohérente en connectant une autre source de lumière fortement incohérente à ladite première extrémité (211) dudit guide d'ondes actif (21).

8. Appareil optique (100) selon l'une quelconque des revendications 4 à 7, **caractérisé en ce que** :

   - ladite entrée (23) est optiquement connectée à ladite première extrémité (211) dudit guide d'ondes actif (21) ;
   - ledit signal optique cohérent (1000) et au moins une partie de ladite lumière fortement incohérente sont propagés dans ledit guidé d'ondes actif (21), de ladite première extrémité (211) vers ladite deuxième extrémité (212) ; et
   - ledit dispositif optique-optique (20) comprend en outre un filtre optique approprié (26) qui est associé à ladite sortie (24) et est en mesure d'éliminer ledit signal optique cohérent (1000) après qu'il a été propagé le long dudit guide d'ondes actif (21).

9. Appareil optique (100) selon l'une quelconque des revendications 4 à 7, **caractérisé en ce que** :

   - ladite deuxième extrémité (212) dudit guide d'ondes actif (21) est aussi optiquement connectée à ladite entrée (23) ;
   - ledit signal optique cohérent (1000) est propagé dans ledit premier guide d'ondes (21), de ladite deuxième extrémité (212) vers ladite première extrémité (211) ; et
   - ladite lumière fortement incohérente est propagée au moins partiellement dans ledit guide d'ondes actif (21), de ladite première extrémité (211) vers ladite deuxième extrémité (212).

10. Système de transmission optique comprenant :

   a) un appareil d'émission (20) servant à émettre un signal optique cohérent (1000) transportant un ensemble de données numériques ;
   b) une ligne de transmission optique (210) connectée audit appareil d'émission (200) et servant à propager ledit signal optique cohérent (1000) ;
   c) un appareil de réception (220) connecté à ladite ligne de transmission optique (210) ;

d) un appareil optique (100) associé à ladite ligne de transmission optique (210) et servant à sélectionner un élément prédéterminé d'information dans ledit signal optique cohérent (1000), ledit appareil optique (100) comprenant :

- une entrée (23) destinée à au moins une partie dudit signal optique cohérent (1000) ;
- un dispositif optique-optique (20) connecté à ladite entrée (23) et servant à propager au moins la partie dudit signal optique cohérent (1000), ledit signal optique-optique (20) étant en mesure de produire une lumière fortement incohérente et de transférer ledit ensemble de données numériques transporté par ledit signal optique cohérent (1000) à ladite lumière fortement incohérente de manière à produire, à sa sortie, un signal optique fortement incohérent (2000) transportant ledit ensemble de données numériques ;
- un séparateur de faisceau optique (30) servant à cloner ledit signal optique fortement incohérent (2000) en au moins deux signaux optiques fortement incohérents, ledit séparateur de faisceau optique (30) ayant une entrée connectée audit dispositif optique-optique (20) et au moins deux sorties destinées auxdits deux ou plus de deux signaux optiques fortement incohérents ;
- au moins deux lignes à retard optiques (40) connectées auxdites deux ou plus de deux sorties dudit séparateur de faisceau optique (30), lesdites deux ou plus de deux lignes à retard optiques (40) ayant des longueurs différentes les unes des autres, la différence de longueur entre lesdites deux ou plus de deux lignes à retard optiques (40) étant de nature à retarder l'un desdits deux ou plus de deux signaux optiques incohérents d'un temps prédéterminé par rapport à l'autre ou aux autres, ledit temps prédéterminé étant plus long que ledit temps de cohérence prédéterminé de ladite lumière fortement incohérente et étant choisi en fonction dudit élément prédéterminé d'information qui doit être sélectionné ;
- un coupleur optique (50) ayant au moins deux entrées qui sont connectées auxdites deux ou plus de deux lignes à retard optiques (40) et une unique sortie, ledit coupleur étant en mesure de recombiner lesdits deux ou plus de deux signaux optiques fortement incohérents en un unique signal de sortie optique fortement incohérent (3000) qui présente une intensité qui est maximale en présence dudit élément prédéterminé d'information qui doit être sélectionné.

11. Procédé permettant de sélectionner un élément prédéterminé d'information dans un signal optique cohérent transportant un ensemble de données numériques, ledit procédé comprenant les phases suivantes :

a) produire une lumière fortement incohérente ayant un temps de cohérence prédéterminé ;
b) transférer ledit ensemble de données numériques dudit signal optique cohérent à ladite lumière fortement incohérente de manière à obtenir un signal optique fortement incohérent transportant ledit ensemble de données numériques ;
c) cloner ledit signal optique fortement incohérent en au moins deux signaux optiques fortement incohérents ;
d) retarder l'un desdits deux ou plus de deux signaux optiques fortement incohérents d'un temps prédéterminé par rapport à l'autre ou aux autres, ledit temps prédéterminé étant plus long que ledit temps de cohérence prédéterminé de ladite lumière fortement incohérente et étant choisi en fonction dudit élément prédéterminé d'information numérique qui doit être sélectionné ;
e) recombiner lesdits deux ou plus de deux signaux optiques fortement incohérents en un unique signal de sortie optique fortement incohérent dont l'intensité est maximale en présence dudit élément prédéterminé d'information qui doit être sélectionné.

FIG. 1

FIG. 2

FIG. 3

FIG. 4

20

211　　　　　212

29

2000

1000　　23　　　　　　21　　　　26　　24

27

FIG. 5

Tb

N*T$_c$

FIG. 6

FIG. 7

FIG. 8

FIG. 9

FIG. 10

FIG. 11

FIG. 12